(19)

Europäisches
Patentamt
European
Patent Office
Office européen
des brevets

(11) **EP 4 373 005 A1**

(12) **EUROPEAN PATENT APPLICATION**
published in accordance with Art. 153(4) EPC

(43) Date of publication:
**22.05.2024   Bulletin 2024/21**

(21) Application number: **22852282.7**

(22) Date of filing: **04.08.2022**

(51) International Patent Classification (IPC):
**H04B 7/0456** [(2017.01)]     **H04B 7/06** [(2006.01)]

(52) Cooperative Patent Classification (CPC):
**H04B 7/0456; H04B 7/06; H04L 5/00**

(86) International application number:
**PCT/CN2022/110150**

(87) International publication number:
**WO 2023/011570 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **05.08.2021   CN 202110898764**

(71) Applicant: **Huawei Technologies Co., Ltd.
Shenzhen, Guangdong 518129 (CN)**

(72) Inventors:
• **GAO, Junhui
Shenzhen, Guangdong 518129 (CN)**

• **GE, Shibin
Shenzhen, Guangdong 518129 (CN)**
• **JIN, Huangping
Shenzhen, Guangdong 518129 (CN)**
• **YUAN, Yiling
Shenzhen, Guangdong 518129 (CN)**
• **FAN, Li
Shenzhen, Guangdong 518129 (CN)**
• **ZHANG, Didi
Shenzhen, Guangdong 518129 (CN)**

(74) Representative: **Grünecker Patent- und
Rechtsanwälte
PartG mbB
Leopoldstraße 4
80802 München (DE)**

(54) **CHANNEL INFORMATION FEEDBACK METHOD AND COMMUNICATION APPARATUS**

(57)    This application provides a channel information feedback method and a communication apparatus. In the method, first information and an SCI have a same priority in UCI sent by a terminal device. The first information indicates a second frequency domain DFT vector set selected by the terminal device, and the SCI indicates a space-frequency vector corresponding to a strongest coefficient in a first space-frequency vector set corresponding to the second frequency domain DFT vector set and CSI-RS ports selected by the terminal device. In other words, the SCI indicates the space-frequency vector that corresponds to the second frequency domain DFT vector set selected by the terminal device and that corresponds to the strongest coefficient, so that a network device obtains, based on the SCI and the first information that have the same priority and that are included in the UCI, a weighting coefficient of a strongest space-frequency vector corresponding to a downlink channel. Therefore, when a UCI reporting resource is limited, the terminal device feeds back at least the SCI and the first information, so that accuracy of a frequency domain location that corresponds to the SCI and that is determined by the network device based on the SCI and the first information is improved, to ensure validity of a precoding matrix as much as possible.

FIG. 5

**Description**

This application claims priority to Chinese Patent Application No. 202110898764.7, filed with the China National Intellectual Property Administration on August 5, 2021 and entitled "CHANNEL INFORMATION FEEDBACK METHOD AND COMMUNICATION APPARATUS", which is incorporated herein by reference in its entirety.

**TECHNICAL FIELD**

This application relates to the field of wireless technologies, and in particular, to a channel information feedback method and a communication apparatus.

**BACKGROUND**

A multiple-input multiple-output (multiple-input multiple-output, MIMO) technology is a core technology of a long term evolution (long term evolution, LTE) system and 5th generation (5th generation, 5G) new radio (new radio, NR). A network device may obtain a downlink optimal precoding matrix by using precoding matrix indicator (precoding matrix indicator, PMI) related information sent by a terminal device. The PMI related information is carried in uplink control information (uplink control information, UCI).

Currently, the terminal device needs to perform selection based on a space-frequency vector set jointly corresponding to a frequency domain discrete Fourier transform (discrete Fourier transform, DFT) vector set configured by the network device and channel state information reference signal (channel state information reference signal, CSI-RS) ports, and use, as a part or all of the PMI related information, indication information corresponding to a selection result. For example, the indication information corresponding to the selection result includes at least frequency domain indication information indicating selected frequency domain DFT vectors and a strongest coefficient indicator (strongest coefficient indicator, SCI). The SCI indicates a space-frequency vector corresponding to a strongest coefficient of a plurality of weighting coefficients corresponding to the selected space-frequency vector set.

In the conventional technology, the terminal device selects some frequency domain DFT vectors from a universal set of the frequency domain DFT vector set. The terminal device may perform cyclic shift in the universal set of the frequency domain DFT vector set, and shift a frequency domain DFT vector corresponding to the SCI to a location whose index is 0 in a frequency domain DFT vector set corresponding to the universal set. In other words, the network device may determine that an index of the frequency domain DFT vector of the SCI is 0 by default. Consequently, the SCI is uncorrelated with the frequency domain indication information indicating the selected frequency domain DFT vectors. When an uplink resource is limited due to poor channel quality or a large quantity of terminal devices communicating with the network device, the terminal device may report only information (for example, the SCI) with a high priority in the UCI, and discard some information (for example, the frequency domain indication information) with a low priority in the UCI.

However, if the terminal device selects some frequency domain DFT vectors from a subset of the frequency domain DFT vector set, in this case, if the terminal device performs cyclic shift in the subset of the frequency domain DFT vector set, a location of a frequency domain DFT vector corresponding to the SCI in the frequency domain DFT vector set corresponding to the universal set of the frequency domain DFT vector set may no longer be a location whose index is 0. If the UCI reporting manner in the conventional technology is still used, when a UCI reporting resource is limited, the network device may obtain only the SCI from the UCI, but does not obtain the frequency domain indication information. As a result, a frequency domain location that corresponds to the SCI and that is determined by the network device is inaccurate. This affects accuracy of precoding performed by the network device, and further affects communication efficiency.

**SUMMARY**

Embodiments of this application provide a channel information feedback method and a communication apparatus, so that a network device obtains, based on an SCI and first information that have a same priority and that are included in UCI, a weighting coefficient of a strongest space-frequency vector corresponding to a downlink channel. Therefore, when a UCI reporting resource is limited, a terminal device feeds back at least the SCI and the first information indicating a second frequency domain DFT vector set, so that accuracy of a frequency domain location that corresponds to the SCI and that is determined by the network device based on the SCI and the first information is improved, to ensure validity of a precoding matrix as much as possible.

A first aspect of embodiments of this application provides a channel information feedback method. The method may be performed by a terminal device, or may be performed by a component (for example, a processor, a chip, or a chip system) of the terminal device. In the method, first, the terminal device receives first indication information, where the first indication information indicates a first frequency domain DFT vector set, a subset of the first frequency domain DFT vector set includes a second frequency domain DFT vector set, and the second frequency domain DFT vector set and CSI-RS ports selected by the terminal device correspond to a first space-frequency vector set; then, the terminal device determines a strongest coefficient indicator SCI based on the first indication information, where the SCI indicates a space-frequency vector corresponding to a strongest coefficient in the first space-frequency vector set; and then, the terminal device sends uplink control information UCI, where the UCI includes first information and the SCI, the first information indicates the second frequency domain DFT vector set, and the first information and the SCI have a same priority in the UCI.

Optionally, the first information and the SCI have the same priority in the UCI, in other words, a priority of the first information in the UCI is the same as a priority of the SCI in the UCI.

Based on the foregoing technical solution, in the UCI sent by the terminal device, the priority of the first information is the same as the priority of the SCI. The first information indicates the second frequency domain DFT vector set selected by the terminal device, and the SCI indicates the space-frequency vector corresponding to the strongest coefficient in the space-frequency vector set corresponding to the second frequency domain DFT vector set and the CSI-RS ports selected by the terminal device. In other words, the SCI indicates the space-frequency vector that corresponds to the second frequency domain DFT vector set selected by the terminal device and that corresponds to the strongest coefficient, so that a network device obtains, based on the SCI and the first information that have the same priority and that are included in the UCI, a weighting coefficient of a strongest space-frequency vector corresponding to a downlink channel. Therefore, when a UCI reporting resource is limited, the terminal device feeds back at least the SCI and the first information indicating the second frequency domain DFT vector set, so that accuracy of a frequency domain location that corresponds to the SCI and that is determined by the network device based on the SCI and the first information is improved, to ensure validity of a precoding matrix as much as possible.

A second aspect of embodiments of this application provides a channel information feedback method. The method may be performed by a network device, or may be performed by a component (for example, a processor, a chip, or a chip system) of the network device. In the method, first, the network device sends first indication information, where the first indication information indicates a first frequency domain DFT vector set, a subset of the first frequency domain DFT vector set includes a second frequency domain DFT vector set, and the second frequency domain DFT vector set and CSI-RS ports selected by a terminal device correspond to a first space-frequency vector set; and then, the network device receives uplink control information UCI, where the UCI includes first information and an SCI, the SCI indicates a space-frequency vector corresponding to a strongest coefficient in the first space-frequency vector set, the first information indicates the second frequency domain DFT vector set, and the first information and the SCI have a same priority in the UCI.

Optionally, the first information and the SCI have the same priority in the UCI, in other words, a priority of the first information in the UCI is the same as a priority of the SCI in the UCI.

Based on the foregoing technical solution, in the UCI received by the network device, the priority of the first information is the same as the priority of the SCI. The first information indicates the second frequency domain DFT vector set selected by the terminal device, and the SCI indicates the space-frequency vector corresponding to the strongest coefficient in the space-frequency vector set corresponding to the second frequency domain DFT vector set and the CSI-RS ports selected by the terminal device. In other words, the SCI indicates the space-frequency vector that corresponds to the second frequency domain DFT vector set selected by the terminal device and that corresponds to the strongest coefficient, so that the network device obtains, based on the SCI and the first information that have the same priority and that are included in the UCI, a weighting coefficient of a strongest space-frequency vector corresponding to a downlink channel. Therefore, when a UCI reporting resource is limited, the terminal device feeds back at least the SCI and the first information indicating the second frequency domain DFT vector set, so that accuracy of a frequency domain location that corresponds to the SCI and that is determined by the network device based on the SCI and the first information is improved, to ensure validity of a precoding matrix as much as possible.

In a possible implementation of the first aspect or the second aspect of embodiments of this application, a quantity of bits occupied by the SCI is correlated with a quantity of frequency domain DFT vectors in the second frequency domain DFT vector set.

Based on the foregoing technical solution, the SCI indicates the space-frequency vector that corresponds to the second frequency domain DFT vector set selected by the terminal device and that corresponds to the strongest coefficient. The SCI may indicate a location, of a frequency domain DFT vector that is of the strongest coefficient and that is selected by the terminal device, in the second frequency domain DFT vector set by using at least some occupied bits.

In a possible implementation of the first aspect or the second aspect of embodiments of this application, the quantity of bits occupied by the SCI is further correlated with a quantity of CSI-RS ports.

Based on the foregoing technical solution, the SCI indicates the space-frequency vector corresponding to the strongest coefficient in the space-frequency vector set corresponding to the second frequency domain DFT vector set selected by the terminal device and the CSI-RS ports selected by the terminal device. The SCI may indicate a location, of a CSI-RS port that is of the strongest coefficient and that is selected by the terminal device, in the selected CSI-RS ports by using at least some occupied bits.

In a possible implementation of the first aspect or the second aspect of embodiments of this application, the quantity of bits occupied by the SCI satisfies a first manner, and the first manner includes:

$$\text{Quantity of bits occupied by the SCI} = \lceil \log_2(2LM) \rceil,$$

where

2L represents the quantity of CSI-RS ports, and M represents the quantity of frequency domain DFT vectors in the second frequency domain DFT vector set.

It should be noted that, in this embodiment and subsequent embodiments, 2L indicates a quantity of selected CSI-RS ports (if a dual polarization direction is used, L CSI-RS ports are selected in each polarization direction), and M indicates a quantity of selected frequency domain DFT vectors.

In a possible implementation of the first aspect or the second aspect of embodiments of this application, the quantity of bits occupied by the SCI satisfies a second manner, and the second manner includes:

$$\text{Quantity of bits occupied by the SCI} = \lceil \log_2(2L) \rceil + \lceil \log_2(M) \rceil,$$

where

2L represents the quantity of CSI-RS ports, and M represents the quantity of frequency domain DFT vectors in the second frequency domain DFT vector set.

In a possible implementation of the first aspect or the second aspect of embodiments of this application, a quantity of bits occupied by the first information satisfies a third manner, and the third manner includes:

$$\text{Quantity of bits occupied by the first information} = \left\lceil \log_2 \binom{N}{M} \right\rceil,$$

where

N represents a quantity of frequency domain DFT vectors in the first frequency domain DFT vector set, M represents the quantity of frequency domain DFT vectors in the second frequency domain DFT vector set, and $\binom{N}{M}$ represents a quantity of combinations of M from N.

Based on the foregoing technical solution, the first information indicates the second frequency domain DFT vector set selected by the terminal device. When cyclic shift is not performed on the frequency domain DFT vectors to enable an index of the frequency domain DFT vector corresponding to the strongest coefficient to be 0, the first information of the terminal device includes a location indicator of the frequency domain DFT vector corresponding to the strongest coefficient, so that the quantity of bits occupied by the first information is correlated with the quantity N of frequency domain DFT vectors configured by the network device and the quantity M of frequency domain DFT vectors selected by the terminal device, and N and M are indicated by using the quantity of bits in the third manner. Therefore, because the terminal device does not need to perform cyclic shift on the frequency domain DFT vectors, implementation complexity is reduced.

In a possible implementation of the first aspect or the second aspect of embodiments of this application, a quantity of bits occupied by the first information satisfies a fourth manner, and the fourth manner includes:

$$\text{Quantity of bits occupied by the first information} = \left\lceil \log_2 \binom{N-1}{M-1} \right\rceil,$$

where

N represents a quantity of frequency domain DFT vectors in the first frequency domain DFT vector set, M represents the quantity of frequency domain DFT vectors in the second frequency domain DFT vector set, and $\binom{N-1}{M-1}$ represents a quantity of combinations of M - 1 from N - 1.

Based on the foregoing technical solution, the first information indicates the second frequency domain DFT vector set selected by the terminal device. When the terminal device performs cyclic shift on the first frequency domain DFT vector set to enable an index of the frequency domain DFT vector corresponding to the strongest coefficient indicated by the SCI to be 0, the terminal device considers, by default, that the frequency domain DFT vector corresponding to the strongest coefficient is definitely selected. Therefore, the quantity of bits occupied by the first information is correlated with the quantity N-1 of frequency domain DFT vectors that are configured by the network device and from which the frequency domain DFT vector corresponding to the strongest coefficient is removed and the quantity M-1 of frequency domain DFT vectors that are selected by the terminal device and from which the frequency domain DFT vector corresponding to the strongest coefficient is removed, and N-1 and M-1 are indicated by using the quantity of bits in the fourth manner. Therefore, bit overheads of the SCI are reduced.

A third aspect of embodiments of this application provides a communication apparatus, including a transceiver unit and a processing unit.

The transceiver unit is configured to receive first indication information, where the first indication information indicates a first frequency domain DFT vector set, a subset of the first frequency domain DFT vector set includes a second frequency domain DFT vector set, and the second frequency domain DFT vector set and CSI-RS ports selected by the terminal device correspond to a first space-frequency vector set.

The processing unit is configured to determine a strongest coefficient indicator SCI based on the first indication information, where the SCI indicates a space-frequency vector corresponding to a strongest coefficient in the space-frequency vector set.

The transceiver unit is further configured to send uplink control information UCI, where the UCI includes first information and the SCI, the first information indicates the second frequency domain DFT vector set, and the first information and the SCI have a same priority in the UCI.

Optionally, the first information and the SCI have the same priority in the UCI, in other words, a priority of the first information in the UCI is the same as a priority of the SCI in the UCI.

Based on the foregoing technical solution, in the UCI sent by the transceiver unit, the priority of the first information is the same as the priority of the SCI. The first information indicates the second frequency domain DFT vector set selected by the terminal device, and the SCI indicates the space-frequency vector corresponding to the strongest coefficient in the space-frequency vector set corresponding to the second frequency domain DFT vector set and the CSI-RS ports selected by the terminal device. In other words, the SCI indicates the space-frequency vector that corresponds to the second frequency domain DFT vector set selected by the terminal device and that corresponds to the strongest coefficient, so that a network device obtains, based on the SCI and the first information that have the same priority and that are included in the UCI, a weighting coefficient of a strongest space-frequency vector corresponding to a downlink channel. Therefore, when a UCI reporting resource is limited, the terminal device feeds back at least the SCI and the first information indicating the second frequency domain DFT vector set, so that accuracy of a frequency domain location that corresponds to the SCI and that is determined by the network device based on the SCI and the first information is improved, to ensure validity of a precoding matrix as much as possible.

A fourth aspect of embodiments of this application provides a communication apparatus, including a sending unit and a receiving unit.

The sending unit is configured to send first indication information, where the first indication information indicates a first frequency domain DFT vector set, a subset of the first frequency domain DFT vector set includes a second frequency domain DFT vector set, and the second frequency domain DFT vector set and CSI-RS ports selected by a terminal device correspond to a first space-frequency vector set.

The receiving unit is configured to receive uplink control information UCI, where the UCI includes first information and an SCI, the SCI indicates a space-frequency vector corresponding to a strongest coefficient in the space-frequency vector set, the first information indicates the second frequency domain DFT vector set, and the first information and the SCI have a same priority in the UCI.

Optionally, the first information and the SCI have the same priority in the UCI, in other words, a priority of the first information in the UCI is the same as a priority of the SCI in the UCI.

Based on the foregoing technical solution, in the UCI received by the receiving unit, the priority of the first information is the same as the priority of the SCI. The first information indicates the second frequency domain DFT vector set selected by the terminal device, and the SCI indicates the space-frequency vector corresponding to the strongest coefficient in the space-frequency vector set corresponding to the second frequency domain DFT vector set and the CSI-RS ports selected by the terminal device. In other words, the SCI indicates the space-frequency vector that corresponds to the second frequency domain DFT vector set selected by the terminal device and that corresponds to the strongest coefficient, so that the network device obtains, based on the SCI and the first information that have the same priority and that are included in the UCI, a weighting coefficient of a strongest space-frequency vector corresponding to a downlink channel. Therefore, when a UCI reporting resource is limited, the terminal device feeds back at least the SCI and the first information indicating the second frequency domain DFT vector set, so that accuracy of a frequency domain location that corresponds to the SCI and that is determined by the network device based on the SCI and the first information is improved, to ensure validity of a precoding matrix as much as possible.

In a possible implementation of the third aspect or the fourth aspect of embodiments of this application, a quantity of bits occupied by the SCI is correlated with a quantity of frequency domain DFT vectors in the second frequency domain DFT vector set.

In a possible implementation of the third aspect or the fourth aspect of embodiments of this application, the quantity of bits occupied by the SCI is further correlated with a quantity of CSI-RS ports.

In a possible implementation of the third aspect or the fourth aspect of embodiments of this application, the quantity of bits occupied by the SCI satisfies a first manner, and the first manner includes:

$$\text{Quantity of bits occupied by the SCI} = \lceil \log_2(2LM) \rceil,$$

where

2L represents the quantity of CSI-RS ports, and M represents the quantity of frequency domain DFT vectors in the second frequency domain DFT vector set.

In a possible implementation of the third aspect or the fourth aspect of embodiments of this application, the quantity of bits occupied by the SCI satisfies a second manner, and the second manner includes:

$$\text{Quantity of bits occupied by the SCI} = \lceil \log_2(2L) \rceil + \lceil \log_2(M) \rceil,$$

where

2L represents the quantity of CSI-RS ports, and M represents the quantity of frequency domain DFT vectors in the second frequency domain DFT vector set.

In a possible implementation of the third aspect or the fourth aspect of embodiments of this application, a quantity of bits occupied by the first information satisfies a third manner, and the third manner includes:

$$\text{Quantity of bits occupied by the first information} = \left\lceil \log_2 \binom{N}{M} \right\rceil,$$

where

N represents a quantity of frequency domain DFT vectors in the first frequency domain DFT vector set, M represents the quantity of frequency domain DFT vectors in the second frequency domain DFT vector set, and $\binom{N}{M}$ represents a quantity of combinations of M from N.

In a possible implementation of the third aspect or the fourth aspect of embodiments of this application, a quantity of bits occupied by the first information satisfies a fourth manner, and the fourth manner includes:

$$\text{Quantity of bits occupied by the first information} = \left\lceil \log_2 \binom{N-1}{M-1} \right\rceil,$$

where

N represents a quantity of frequency domain DFT vectors in the first frequency domain DFT vector set, M represents the quantity of frequency domain DFT vectors in the second frequency domain DFT vector set, and $\binom{N-1}{M-1}$ represents a quantity of combinations of M - 1 from N - 1.

It should be noted that for descriptions of the plurality of possible implementations of the third aspect and the fourth aspect and corresponding technical effects, refer to the foregoing descriptions of the plurality of possible implementations of the first aspect and the second aspect and the corresponding technical effects. Details are not described herein again.

A fifth aspect of embodiments of this application provides a channel information feedback method. The method may be performed by a terminal device, or may be performed by a component (for example, a processor, a chip, or a chip system) of the terminal device. In the method, first, the terminal device receives first indication information, where the first indication information indicates a first frequency domain DFT vector set, a subset of the first frequency domain DFT vector set includes a second frequency domain DFT vector set, and the first frequency domain DFT vector set and CSI-RS ports selected by the terminal device correspond to a second space-frequency vector set; then, the terminal device determines a strongest coefficient indicator SCI based on the first indication information, where the SCI indicates a space-frequency vector corresponding to a strongest coefficient in the second space-frequency vector set; and then, the terminal device sends uplink control information UCI, where the UCI includes first information and the SCI, the first information indicates the second frequency domain DFT vector set, and a priority of the first information in the UCI is lower than a priority of the SCI in the UCI.

Optionally, the priority of the first information in the UCI is lower than the priority of the SCI in the UCI, in other words, the priority of the SCI in the UCI is higher than the priority of the first information in the UCI.

Based on the foregoing technical solution, in the UCI sent by the terminal device, the priority of the first information is lower than the priority of the SCI. The first information indicates the second frequency domain DFT vector set selected by the terminal device, and the SCI indicates the space-frequency vector corresponding to the strongest coefficient in the space-frequency vector set corresponding to the first frequency domain DFT vector set configured by a network device and the CSI-RS ports selected by the terminal device. In other words, the SCI indicates the space-frequency vector that corresponds to the first frequency domain DFT vector set configured by the network device and that corresponds to the strongest coefficient, and there is no correlation between the SCI and the second frequency domain DFT vector set selected by the terminal device, so that the network device can obtain, based on the higher-priority SCI included in the UCI, a weighting coefficient of a strongest space-frequency vector corresponding to a downlink channel. Therefore, when a UCI reporting resource is limited, the terminal device feeds back at least the SCI, so that accuracy of a frequency domain location that corresponds to the SCI and that is determined by the network device based on the SCI can be improved, to ensure validity of a precoding matrix as much as possible. In addition, when the UCI reporting resource is limited, the terminal device may not need to feed back the first information, so that overheads can be reduced to a specific degree.

A sixth aspect of embodiments of this application provides a channel information feedback method. The method may be performed by a network device, or may be performed by a component (for example, a processor, a chip, or a chip system) of the network device. In the method, first, the network device sends first indication information, where the first indication information indicates a first frequency domain DFT vector set, a subset of the first frequency domain DFT vector set includes a second frequency domain DFT vector set, and the first frequency domain DFT vector set and CSI-RS ports selected by a terminal device correspond to a second space-frequency vector set; and then, the network device receives uplink control information UCI, where the UCI includes first information and an SCI, the SCI indicates a space-frequency vector corresponding to a strongest coefficient in the second space-frequency vector set, the first information indicates the second frequency domain DFT vector set, and a priority of the first information in the UCI is lower than a priority of the SCI in the UCI.

Optionally, the priority of the first information in the UCI is lower than the priority of the SCI in the UCI, in other words, the priority of the SCI in the UCI is higher than the priority of the first information in the UCI.

Based on the foregoing technical solution, in the UCI received by the network device, the priority of the first information is lower than the priority of the SCI. The first information indicates the second frequency domain DFT vector set selected by the terminal device, and the SCI indicates the space-frequency vector corresponding to the strongest coefficient in the space-frequency vector set corresponding to the first frequency domain DFT vector set configured by the network device and the CSI-RS ports selected by the terminal device. In other words, the SCI indicates the space-frequency vector that corresponds to the first frequency domain DFT vector set configured by the network device and that corresponds to the strongest coefficient, and there is no correlation between the SCI and the second frequency domain DFT vector set selected by the terminal device, so that the network device can obtain, based on the higher-priority SCI included in the UCI, a weighting coefficient of a strongest space-frequency vector corresponding to a downlink channel. Therefore, when a UCI reporting resource is limited, the terminal device feeds back at least the SCI, so that accuracy of a frequency domain location that corresponds to the SCI and that is determined by the network device based on the SCI can be improved, to ensure validity of a precoding matrix as much as possible. In addition, when the UCI reporting resource is limited, the terminal device may not need to feed back the first information, so that overheads can be reduced to a specific degree.

In a possible implementation of the fifth aspect or the sixth aspect of embodiments of this application, a quantity of bits occupied by the SCI is correlated with a quantity of frequency domain DFT vectors in the first frequency domain DFT vector set.

Based on the foregoing technical solution, the SCI indicates the space-frequency vector that corresponds to the first frequency domain DFT vector set configured by the network device and that corresponds to the strongest coefficient. The SCI may indicate a location, of a frequency domain DFT vector that is of the strongest coefficient and that is selected by the terminal device, in the first frequency domain DFT vector set by using at least some occupied bits.

In a possible implementation of the fifth aspect or the sixth aspect of embodiments of this application, the quantity of bits occupied by the SCI is further correlated with a quantity of CSI-RS ports.

Based on the foregoing technical solution, the SCI indicates the space-frequency vector corresponding to the strongest coefficient in the space-frequency vector set corresponding to the first frequency domain DFT vector set selected by the terminal device and the CSI-RS ports selected by the terminal device. The SCI may indicate a location, of a CSI-RS port that is of the strongest coefficient and that is selected by the terminal device, in the selected CSI-RS ports by using at least some occupied bits.

In a possible implementation of the fifth aspect or the sixth aspect of embodiments of this application, the quantity of bits occupied by the SCI satisfies a fifth manner, and the fifth manner includes:

$$\text{Quantity of bits occupied by the SCI} = \lceil \log_2(2LN) \rceil,$$

where

2L represents the quantity of CSI-RS ports, and N represents the quantity of frequency domain DFT vectors in the first frequency domain DFT vector set.

In a possible implementation of the fifth aspect or the sixth aspect of embodiments of this application, the quantity of bits occupied by the SCI satisfies a sixth manner, and the sixth manner includes:

$$\text{Quantity of bits occupied by the SCI} = \lceil \log_2(2L) \rceil + \lceil \log_2(N) \rceil,$$

where

2L represents the quantity of CSI-RS ports, and N represents the quantity of frequency domain DFT vectors in the first frequency domain DFT vector set.

In a possible implementation of the fifth aspect or the sixth aspect of embodiments of this application, a quantity of bits occupied by the first information satisfies a seventh manner, and the seventh manner includes:

$$\text{Quantity of bits occupied by the first information} = \left\lceil \log_2 \binom{N}{M} \right\rceil,$$

where

N represents the quantity of frequency domain DFT vectors in the first frequency domain DFT vector set, M represents a quantity of frequency domain DFT vectors in the second frequency domain DFT vector set, and $\binom{N}{M}$ represents a quantity of combinations of M from N.

Based on the foregoing technical solution, the first information indicates the second frequency domain DFT vector set selected by the terminal device. When cyclic shift is not performed on the frequency domain DFT vectors to enable an index of the frequency domain DFT vector corresponding to the strongest coefficient to be 0, the first information of the terminal device includes a location indicator of the frequency domain DFT vector corresponding to the strongest coefficient, so that the quantity of bits occupied by the first information is correlated with the quantity N of frequency domain DFT vectors configured by the network device and the quantity M of frequency domain DFT vectors selected by the terminal device, and N and M are indicated by using the quantity of bits in the seventh manner. Therefore, because the terminal device does not need to perform cyclic shift on the frequency domain DFT vectors, implementation complexity is reduced.

In a possible implementation of the fifth aspect or the sixth aspect of embodiments of this application, a quantity of bits occupied by the first information satisfies an eighth manner, and the eighth manner includes:

$$\text{Quantity of bits occupied by the first information} = \left\lceil \log_2 \binom{N-1}{M-1} \right\rceil,$$

where

N represents the quantity of frequency domain DFT vectors in the first frequency domain DFT vector set, M represents a quantity of frequency domain DFT vectors in the second frequency domain DFT vector set, and $\binom{N-1}{M-1}$ represents a quantity of combinations of M - 1 from N - 1.

Based on the foregoing technical solution, the first information indicates the second frequency domain DFT vector set selected by the terminal device. When the terminal device performs cyclic shift on the first frequency domain DFT vector set to enable an index of the frequency domain DFT vector corresponding to the strongest coefficient indicated by the SCI to be 0, the terminal device considers, by default, that the frequency domain DFT vector corresponding to the strongest coefficient is definitely selected. Therefore, the quantity of bits occupied by the first information is correlated with the quantity N-1 of frequency domain DFT vectors that are configured by the network device and from which the frequency domain DFT vector corresponding to the strongest coefficient is removed and the quantity M-1 of frequency domain DFT vectors that are selected by the terminal device and from which the frequency domain DFT vector corresponding to the strongest coefficient is removed, and N-1 and M-1 are indicated by using the quantity of bits in the eighth manner. Therefore, bit overheads of the SCI are reduced.

A seventh aspect of embodiments of this application provides a communication apparatus, including a transceiver unit and a processing unit.

The transceiver unit is configured to receive first indication information, where the first indication information indicates a first frequency domain DFT vector set, a subset of the first frequency domain DFT vector set includes a second frequency domain DFT vector set, and the first frequency domain DFT vector set and CSI-RS ports selected by the terminal device correspond to a second space-frequency vector set.

The processing unit is configured to determine a strongest coefficient indicator SCI based on the first indication information, where the SCI indicates a space-frequency vector corresponding to a strongest coefficient in the second space-frequency vector set.

The transceiver unit is further configured to send uplink control information UCI, where the UCI includes first information and the SCI, the first information indicates the second frequency domain DFT vector set, and a priority of the first information in the UCI is lower than a priority of the SCI in the UCI.

Optionally, the priority of the first information in the UCI is lower than the priority of the SCI in the UCI, in other words, the priority of the SCI in the UCI is higher than the priority of the first information in the UCI.

Based on the foregoing technical solution, in the UCI sent by the transceiver unit, the priority of the first information is lower than the priority of the SCI. The first information indicates the second frequency domain DFT vector set selected by the terminal device, and the SCI indicates the space-frequency vector corresponding to the strongest coefficient in the space-frequency vector set corresponding to the first frequency domain DFT vector set configured by a network device and the CSI-RS ports selected by the terminal device. In other words, the SCI indicates the space-frequency vector that corresponds to the first frequency domain DFT vector set configured by the network device and that corresponds to the strongest coefficient, and there is no correlation between the SCI and the second frequency domain DFT vector set selected by the terminal device, so that the network device can obtain, based on the higher-priority SCI included in the UCI, a weighting coefficient of a strongest space-frequency vector corresponding to a downlink channel. Therefore, when a UCI reporting resource is limited, the terminal device feeds back at least the SCI, so that accuracy of a frequency domain location that corresponds to the SCI and that is determined by the network device based on the SCI can be improved, to ensure validity of a precoding matrix as much as possible. In addition, when the UCI reporting resource is limited, the terminal device may not need to feed back the first information, so that overheads can be reduced to a specific degree.

An eighth aspect of embodiments of this application provides a communication apparatus, including a sending unit and a receiving unit.

The sending unit is configured to send first indication information, where the first indication information indicates a first frequency domain DFT vector set, a subset of the first frequency domain DFT vector set includes a second frequency domain DFT vector set, and the first frequency domain DFT vector set and CSI-RS ports selected by a terminal device correspond to a second space-frequency vector set.

The receiving unit is configured to receive uplink control information UCI, where the UCI includes first information and the SCI, the SCI indicates a space-frequency vector corresponding to a strongest coefficient in the second space-frequency vector set, the first information indicates the second frequency domain DFT vector set, and a priority of the first information in the UCI is lower than a priority of the SCI in the UCI.

Optionally, the priority of the first information in the UCI is lower than the priority of the SCI in the UCI, in other words, the priority of the SCI in the UCI is higher than the priority of the first information in the UCI.

Based on the foregoing technical solution, in the UCI received by the receiving unit, the priority of the first information is lower than the priority of the SCI. The first information indicates the second frequency domain DFT vector set selected by the terminal device, and the SCI indicates the space-frequency vector corresponding to the strongest coefficient in the space-frequency vector set corresponding to the first frequency domain DFT vector set configured by the network device and the CSI-RS ports selected by the terminal device. In other words, the SCI indicates the space-frequency vector that corresponds to the first frequency domain DFT vector set configured by the network device and that corresponds to the strongest coefficient, and there is no correlation between the SCI and the second frequency domain DFT vector set selected by the terminal device, so that the network device can obtain, based on the higher-priority SCI included in the UCI, a weighting coefficient of a strongest space-frequency vector corresponding to a downlink channel. Therefore, when a UCI reporting resource is limited, the terminal device feeds back at least the SCI, so that accuracy of a frequency domain location that corresponds to the SCI and that is determined by the network device based on the SCI can be improved, to ensure validity of a precoding matrix as much as possible. In addition, when the UCI reporting resource is limited, the terminal device may not need to feed back the first information, so that overheads can be reduced to a specific degree.

In a possible implementation of the seventh aspect or the eighth aspect of embodiments of this application, a quantity of bits occupied by the SCI is correlated with a quantity of frequency domain DFT vectors in the first frequency domain DFT vector set.

In a possible implementation of the seventh aspect or the eighth aspect of embodiments of this application, the quantity of bits occupied by the SCI is further correlated with a quantity of CSI-RS ports.

In a possible implementation of the seventh aspect or the eighth aspect of embodiments of this application, the quantity of bits occupied by the SCI satisfies a fifth manner, and the fifth manner includes:

$$\text{Quantity of bits occupied by the SCI} = \lceil \log_2(2LN) \rceil,$$

where

2L represents the quantity of CSI-RS ports, and M represents the quantity of frequency domain DFT vectors in the first frequency domain DFT vector set.

In a possible implementation of the seventh aspect or the eighth aspect of embodiments of this application, the quantity of bits occupied by the SCI satisfies a sixth manner, and the sixth manner includes:

$$\text{Quantity of bits occupied by the SCI} = \lceil \log_2(2L) \rceil + \lceil \log_2(N) \rceil,$$

where

2L represents the quantity of CSI-RS ports, and N represents the quantity of frequency domain DFT vectors in the first frequency domain DFT vector set.

In a possible implementation of the seventh aspect or the eighth aspect of embodiments of this application, a quantity of bits occupied by the first information satisfies a seventh manner, and the seventh manner includes:

$$\text{Quantity of bits occupied by the first information} = \left\lceil \log_2 \binom{N}{M} \right\rceil,$$

where

N represents the quantity of frequency domain DFT vectors in the first frequency domain DFT vector set, M represents a quantity of frequency domain DFT vectors in the second frequency domain DFT vector set, and $\binom{N}{M}$ represents a quantity of combinations of M from N.

In a possible implementation of the seventh aspect or the eighth aspect of embodiments of this application, a quantity of bits occupied by the first information satisfies an eighth manner, and the eighth manner includes:

$$\text{Quantity of bits occupied by the first information} = \left\lceil \log_2 \binom{N-1}{M-1} \right\rceil,$$

where

N represents the quantity of frequency domain DFT vectors in the first frequency domain DFT vector set, M represents a quantity of frequency domain DFT vectors in the second frequency domain DFT vector set, and $\binom{N-1}{M-1}$ represents a quantity of combinations of M - 1 from N - 1.

It should be noted that for descriptions of the plurality of possible implementations of the seventh aspect and the eighth aspect and corresponding technical effects, refer to the foregoing descriptions of the plurality of possible implementations of the third aspect and the fourth aspect and the corresponding technical effects. Details are not described herein again.

A ninth aspect of embodiments of this application provides a communication apparatus, including at least one logic circuit and an input/output interface.

The input/output interface is configured to output UCI.

The logic circuit is configured to perform the method according to any one of the first aspect or the possible implementations of the first aspect.

A tenth aspect of embodiments of this application provides a communication apparatus, including at least one logic circuit and an input/output interface.

The input/output interface is configured to input UCI.

The logic circuit is configured to perform the method according to any one of the second aspect or the possible implementations of the second aspect.

An eleventh aspect of embodiments of this application provides a communication apparatus, including at least one logic circuit and an input/output interface.

The input/output interface is configured to output UCI.

The logic circuit is configured to perform the method according to any one of the fifth aspect or the possible implementations of the fifth aspect.

A twelfth aspect of embodiments of this application provides a communication apparatus, including at least one logic circuit and an input/output interface.

The input/output interface is configured to input UCI.

The logic circuit is configured to perform the method according to any one of the sixth aspect or the possible implementations of the sixth aspect.

A thirteenth aspect of embodiments of this application provides a computer-readable storage medium storing one or more computer executable instructions. When the computer executable instructions are executed by a processor, the processor performs the method according to any one of the first aspect or the possible implementations of the first aspect; when the computer executable instructions are executed by a processor, the processor performs the method according to any one of the second aspect or the possible implementations of the second aspect; when the computer executable instructions are executed by a processor, the processor performs the method according to any one of the fifth aspect or the possible implementations of the fifth aspect; or when the computer executable instructions are executed by a processor, the processor performs the method according to any one of the sixth aspect or the possible implementations of the sixth aspect.

A fourteenth aspect of embodiments of this application provides a computer program product (also referred to as a computer program) storing one or more computer executable instructions. When the computer program product is executed by a processor, the processor performs the method according to any one of the first aspect or the possible implementations of the first aspect; when the computer program product is executed by a processor, the processor performs the method according to any one of the second aspect or the possible implementations of the second aspect; when the computer program product is executed by a processor, the processor performs the method according to any one of the fifth aspect or the possible implementations of the fifth aspect; or when the computer program product is executed by a processor, the processor performs the method according to any one of the sixth aspect or the possible implementations of the sixth aspect.

A fifteenth aspect of embodiments of this application provides a chip system. The chip system includes at least one processor, configured to support a terminal device in implementing the function in any one of the first aspect or the possible implementations of the first aspect, or configured to support a terminal device in implementing the function in any one of the fifth aspect or the possible implementations of the fifth aspect.

In a possible design, the chip system may further include a memory. The memory is configured to store program instructions and data that are necessary for the terminal device. The chip system may include a chip, or may include a chip and another discrete component. Optionally, the chip system further includes an interface circuit. The interface circuit provides program instructions and/or data for the at least one processor.

A sixteenth aspect of embodiments of this application provides a chip system. The chip system includes at least one processor, configured to support a network device in implementing the function in any one of the second aspect or the possible implementations of the second aspect, or configured to support a network device in implementing the function in any one of the sixth aspect or the possible implementations of the sixth aspect.

In a possible design, the chip system may further include a memory. The memory is configured to store program instructions and data that are necessary for the network device. The chip system may include a chip, or may include a chip and another discrete component. Optionally, the chip system further includes an interface circuit. The interface circuit provides program instructions and/or data for the at least one processor.

A seventeenth aspect of embodiments of this application provides a communication system. The communication system includes the terminal device in the fifth aspect and the network device in the sixth aspect; the communication system includes the terminal device in the seventh aspect and the network device in the eighth aspect; the communication system includes the terminal device in the ninth aspect and the network device in the tenth aspect; or the communication system includes the terminal device in the eleventh aspect and the network device in the twelfth aspect.

For technical effects brought by any design manner in the ninth aspect to the seventeenth aspect, refer to technical effects brought by different implementations in the first aspect, the second aspect, the fifth aspect, or the sixth aspect. Details are not described herein again.

It should be understood that, for a component in a device, the foregoing "send" may be referred to as "output", and the foregoing "receive" may be referred to as "input".

It can be learned from the foregoing technical solutions that, in the UCI sent by the terminal device, the priority of the first information is the same as the priority of the SCI. The first information indicates the second frequency domain DFT vector set selected by the terminal device, and the SCI indicates the space-frequency vector corresponding to the strongest coefficient in the space-frequency vector set corresponding to the second frequency domain DFT vector set and the CSI-RS ports selected by the terminal device. In other words, the SCI indicates the space-frequency vector that corresponds to the second frequency domain DFT vector set selected by the terminal device and that corresponds to the strongest coefficient, so that the network device obtains, based on the SCI and the first information that have the same priority and that are included in the UCI, a weighting coefficient of a strongest space-frequency vector corresponding to a downlink channel. Therefore, when a UCI reporting resource is limited, the terminal device feeds back at least the SCI and the first information indicating the second frequency domain DFT vector set, so that accuracy of a frequency domain location that corresponds to the SCI and that is determined by the network device based on the SCI and the first information is improved, to ensure validity of a precoding matrix as much as possible.

## BRIEF DESCRIPTION OF DRAWINGS

FIG. 1 is a schematic diagram of a communication system according to this application;
FIG. 2 is a schematic diagram of a channel information feedback method according to this application;
FIG. 3 is a schematic diagram of reporting an SCI by UE and determining an SCI by a base station according to this application;
FIG. 4 is another schematic diagram of reporting an SCI by UE and determining an SCI by a base station according to this application;
FIG. 5 is a schematic diagram of a channel information feedback method according to this application;
FIG. 6 is a schematic diagram of a terminal device according to this application;
FIG. 7 is a schematic diagram of a network device according to this application;
FIG. 8 is another schematic diagram of a terminal device according to this application; and
FIG. 9 is another schematic diagram of a network device according to this application.

## DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

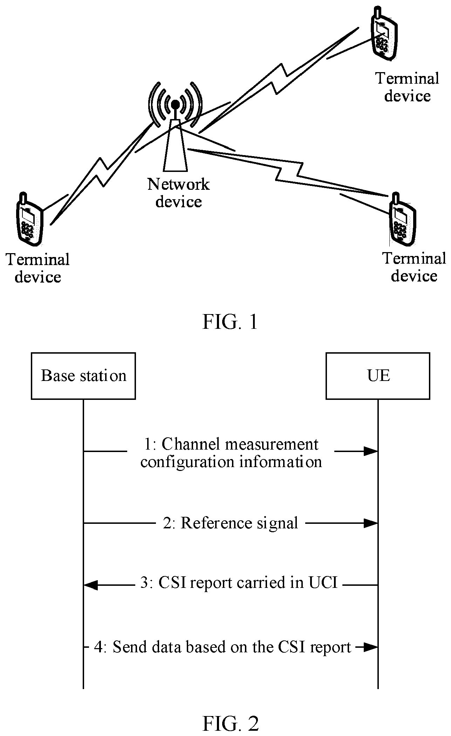

FIG. 1 is a schematic diagram of a possible network architecture to which this application is applicable, including a network device and at least one terminal device. The network device and the terminal device may work in a new radio (new radio, NR) communication system, and the terminal device may communicate with the network device through the NR communication system. The network device and the terminal device may also work in another communication system. This is not limited in embodiments of this application.

The terminal device may be a wireless terminal device that can receive scheduling and indication information of the network device. The wireless terminal device may be a device providing voice and/or data connectivity for a user, a handheld device having a wireless connection function, or another processing device connected to a wireless modem. The wireless terminal device may communicate with one or more core networks or the internet through a radio access network (radio access network, RAN). The wireless terminal device may be a mobile terminal device, such as a mobile (also referred to as a "cellular" phone or a mobile phone (mobile phone)), a computer, or a data card, for example, may be a portable, pocket-sized, handheld, computer built-in, or vehicle-mounted mobile apparatus that exchanges a voice and/or data with the radio access network. For example, the wireless terminal device may be a device such as a personal communication service (personal communication service, PCS) phone, a cordless telephone set, a session initiation protocol (SIP) phone, a wireless local loop (wireless local loop, WLL) station, a personal digital assistant (personal digital assistant, PDA), a pad (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal (remote terminal) device, an access terminal (access terminal) device, a user terminal (user terminal) device, a user agent (user agent), a subscriber station (subscriber station, SS), customer premises equipment (customer premises equipment, CPE), a terminal (terminal), user equipment (user equipment, UE), a mobile terminal (mobile terminal, MT), or the like. Alternatively, the wireless terminal device may be a wearable device or a terminal device in a next-generation communication system, for example, a terminal device in a 5G network, a terminal device in a future evolved public land mobile network (public land mobile network, PLMN), or a terminal device in an NR communication system.

The network device is an entity configured to transmit or receive a signal on a network side, for example, a next generation NodeB (next generation NodeB, gNodeB). The network device may be a device configured to communicate with a mobile device. The network device may be an AP in a wireless local area network (wireless local area network, WLAN) or a base transceiver station (base transceiver station, BTS) in a global system for mobile communications (global system for mobile communications, GSM) or code division multiple access (code division multiple access, CDMA), may be a NodeB (NodeB, NB) in wideband code division multiple access (wideband code division multiple access, WCDMA), or may be an evolved NodeB (evolved NodeB, eNB or eNodeB) in long term evolution (long term evolution, LTE), a relay station, an access point, a vehicle-mounted device, a wearable device, a network device in a 5G network, a network device in a future evolved public land mobile network (public land mobile network, PLMN), a gNodeB in an NR system, or the like. In addition, in embodiments of this application, the network device provides a service for a cell, and the terminal device communicates with the network device by using a transmission resource (for example, a frequency domain resource, also referred to as a spectrum resource) used by the cell. The cell may be a cell corresponding to the network device (for example, a base station). The cell may belong to a macro base station, or may belong to a base station corresponding to a small cell (small cell). The small cell herein may include a metro cell (Metro cell), a micro cell (Micro cell), a pico cell (Pico cell), a femto cell (Femto cell), and the like. These small cells are characterized by a small coverage area and low transmit power, and are applicable to providing a high-rate data transmission service. In addition, in another possible case, the network device may be another apparatus providing a wireless communication function for the terminal device. A specific technology and a specific device form that are used by the network device are not limited in embodiments of this application. For ease of description, in embodiments of this application, an apparatus providing a wireless communication function for a terminal device is referred to as a network device.

It should be understood that FIG. 1 is merely an example of a communication system in this application.

For ease of understanding embodiments of this application, the following first briefly describes terms in embodiments of this application.

1. Precoding technology: When a channel state is known, a network device may process a to-be-sent signal by using a precoding matrix that matches a channel, and then send a processed signal, so that the precoded sent signal adapts to the channel. Therefore, compared with a processing process in which a receiving device receives a sent signal that is not precoded and eliminates inter-channel impact, complexity of a processing process in which a receiving device receives a precoded sent signal and eliminates inter-channel impact is reduced. Therefore, precoding processing is performed on the to-be-sent signal, so that received signal quality (for example, a signal to interference plus noise ratio (signal to interference plus noise ratio, SINR)) is improved. By using the precoding technology, a sending device may further perform transmission with a plurality of receiving devices on a same time-frequency resource, in other words, multi-user multiple-input multiple-output (multiple-user multiple-input multiple-output, MU-MIMO) is implemented. It should be noted that the related description of the precoding technology is merely an example for ease of understanding, and not intended to limit the protection scope of embodiments of this application. In a specific implementation process, the sending device may perform precoding in another manner. For example, when channel information (for example, but not limited to, a channel matrix) cannot be known, precoding is performed by using a preset precoding matrix or in a weighted processing manner. For brevity, specific content thereof is not described in this specification.

2. Precoding matrix indicator (PMI): may indicate a precoding matrix. The precoding matrix may be, for example, a precoding matrix determined by a terminal device based on a channel matrix of a frequency domain unit. The channel matrix may be determined by the terminal device through channel estimation or the like, or based on channel reciprocity. However, it should be understood that a specific method for determining the precoding matrix by the terminal device is not limited to the foregoing description. For specific implementations, refer to conventional technologies. For brevity, implementations are not enumerated herein.

For example, the precoding matrix may be obtained by performing singular value decomposition (singular value decomposition, SVD) on the channel matrix or a covariance matrix of the channel matrix, or may be obtained by performing eigenvalue decomposition (eigenvalue decomposition, EVD) on the covariance matrix of the channel matrix. It should be understood that the foregoing enumerated manners of determining the precoding matrix are merely examples, and should not constitute any limitation on this application. For manners of determining the precoding matrix, refer to conventional technologies. For brevity, manners are not enumerated herein.

It should be noted that, according to a method provided in embodiments of this application, a network device may determine, based on feedback of a terminal device, a combination coefficient of a CSI-RS port, a frequency domain DFT vector, and a space-frequency vector that are used to construct a precoding vector, and further determine a precoding matrix corresponding to each frequency domain unit. The precoding matrix may be directly used for downlink data transmission. Alternatively, some beamforming methods, including, for example, zero forcing (zero forcing, ZF), regularized zero-forcing (regularized zero-forcing, RZF), a minimum mean square error (minimum mean square error, MMSE), and a maximum signal-to-leakage-and-noise ratio (signal-to-leakage-and-noise ratio, SLNR), may be performed to obtain a precoding matrix finally used for downlink data transmission. This is not limited in this application. Unless particularly described, all precoding matrices in the following descriptions may be precoding matrices determined based on the method provided in this application.

It may be understood that a precoding matrix determined by the terminal device may be understood as a to-be-fed-back precoding matrix. The terminal device may indicate the to-be-fed-back precoding matrix by using a PMI, so that the network device restores the precoding matrix based on the PMI. It may be understood that a restored precoding matrix obtained by the network device based on the PMI may be the same as or similar to the to-be-fed-back precoding matrix.

In downlink channel measurement, a higher degree of approximation between the precoding matrix determined by the network device based on the PMI and the precoding matrix determined by the terminal device indicates that the precoding matrix determined by the network device for data transmission can adapt to a channel state to a larger degree, and therefore received signal quality can be improved.

3. Precoding vector: One precoding matrix may include one or more vectors, for example, column vectors. One precoding matrix may be used to determine one or more precoding vectors.

When there is one spatial layer and there is also one polarization direction of a transmit antenna, a precoding matrix is a precoding vector. When there are a plurality of spatial layers and there is one polarization direction of a transmit antenna, a precoding vector may be a component of a precoding matrix at a spatial layer. When there is one spatial layer and there are a plurality of polarization directions of a transmit antenna, a precoding vector may be a component of a precoding matrix in a polarization direction. When there are a plurality of spatial layers and there are also a plurality of polarization directions of a transmit antenna, a precoding vector may be components of a precoding matrix at a spatial layer and in a polarization direction.

It should be understood that the precoding vector may be alternatively determined by a vector in a precoding matrix, for example, obtained by performing mathematical transformation on the vector in the precoding matrix. A mathematical transformation relationship between the precoding matrix and the precoding vector is not limited in this application.

4. Antenna port: may be referred to as a port for short. The antenna port may be understood as a transmit antenna identified by a receiving device, or a transmit antenna that can be distinguished in space. One antenna port may be preconfigured for each virtual antenna, each virtual antenna may be a weighted combination of a plurality of physical antennas, and each antenna port may correspond to one reference signal. Therefore, each antenna port may be referred to as a reference signal port, for example, a CSI-RS port or a sounding reference signal (sounding reference signal, SRS) port.

5. Spatial domain vector (spatial domain vector): is also referred to as a beam vector, a spatial domain beam basis vector, or a spatial domain basis vector. Elements in the spatial domain vector may represent weights of antenna ports. Signals of the antenna ports are linearly superimposed based on the weights that are of the antenna ports and that are represented by the elements in the spatial domain vector, so that an area with a strong signal can be formed in a specific direction of space.

A length of the spatial domain vector may be a quantity $N_s$ of transmit antenna ports in a polarization direction, where $N_s \geq 1$ and is an integer. The spatial domain vector may be, for example, a column vector or a row vector whose length is $N_s$. This is not limited in this application.

Optionally, the spatial domain vector is obtained from a discrete Fourier transform (discrete Fourier transform, DFT) matrix. Each column vector in the DFT matrix may be referred to as a spatial domain DFT vector. In other words, the spatial domain vector may be a DFT vector. The spatial domain vector may be, for example, a DFT vector defined in a type II (type II) codebook in an NR protocol TS 38.214 release 15 (release 15, R15).

6. Spatial domain vector set: may include a plurality of spatial domain vectors of different lengths, to correspond to different quantities of antenna ports. In embodiments of this application, a length of the spatial domain vector is $N_s$. Therefore, lengths of spatial domain vectors in a spatial domain vector set to which a spatial domain vector reported by a terminal device belongs are all $N_s$.

In a possible design, the spatial domain vector set may include $N_s$ spatial domain vectors, and the $N_s$ spatial domain vectors may be orthogonal to each other. Each spatial domain vector in the spatial domain vector set may be obtained from a two-dimensional (two-dimensional, 2D)-DFT matrix. 2D may represent two different directions, for example, a horizontal direction and a vertical direction. If a quantity of antenna ports in the horizontal direction is $N_1$ and a quantity of antenna ports in the vertical direction is $N_2$, $N_s = N_1 N_2$.

The $N_s$ spatial domain vectors may be denoted as, for example, $\mathbf{b}_s^1$, $\mathbf{b}_s^2$, and $\mathbf{b}_s^{N_s}$. A matrix $\mathbf{U}_s$ may be constructed based on the $N_s$ spatial domain vectors, where $\mathbf{U}_s \triangleq \begin{bmatrix} \mathbf{b}_s^1 & \mathbf{b}_s^2 & \cdots & \mathbf{b}_s^{N_s} \end{bmatrix}$. If each spatial domain vector in the spatial domain vector set is obtained from a 2D-DFT matrix, $\boldsymbol{U}_s = \boldsymbol{D}_{N1} \otimes \boldsymbol{D}_{N2}$, where $\boldsymbol{D}_N$ is an orthogonal DFT

matrix of $N \times N$, and an element in an $m^{th}$ row and an $n^{th}$ column is $[\boldsymbol{D}_N]_{m,n} = \frac{1}{\sqrt{N}} e^{\frac{j2\pi mn}{N}}$. In another possible design, the spatial domain vector set may be extended to $O_s \times N_s$ spatial domain vectors by using an oversampling factor Os. In this case, the spatial domain vector set may include $O_s$ subsets, and each subset may include $N_s$ spatial domain vectors. The $N_s$ spatial domain vectors in each subset may be orthogonal to each other. Each spatial domain vector in the spatial domain vector set may be obtained from an oversampled 2D-DFT matrix. The oversampling factor $O_s$ is a positive integer. Specifically, $O_s = O_1 \times O_2$, $O_1$ may be an oversampling factor in a horizontal direction, and $O_2$ may be an oversampling factor in a vertical direction. $O_1 \geq 1$, $O_2 \geq 1$, and $O_1$ and $O_2$ cannot be 1 simultaneously and are both integers.

$N_s$ spatial domain vectors in an $o_s^{th}$ ($0 \leq o_s \leq O_s - 1$ and $o_s$ is an integer) subset of the spatial domain vector set may be denoted as, for example, $\mathbf{b}_{s,o_s}^1$, $\mathbf{b}_{s,o_s}^2$, $\cdots$, and $\mathbf{b}_{s,o_s}^{N_s}$ respectively. In this case, a matrix $\mathbf{U}_s^{o_s}$ may be constructed based on the $N_s$ spatial domain vectors in the $o_s^{th}$ subset, where $\mathbf{U}_{s,o_s} \triangleq \begin{bmatrix} \mathbf{b}_{s,o_s}^1 & \mathbf{b}_{s,o_s}^2 & \cdots & \mathbf{b}_{s,o_s}^{N_s} \end{bmatrix}$.

7. Frequency domain unit: is a unit of a frequency domain resource, and may represent different frequency domain resource granularities. The frequency domain unit may include, for example, but is not limited to, a resource block (resource block, RB), a subcarrier, a resource block group (resource block group, RBG), or a precoding resource block group (precoding resource block group, PRG). In addition, a frequency domain length of one frequency domain unit may be alternatively one RB.

In embodiments of this application, a precoding matrix corresponding to the frequency domain unit may be a precoding matrix determined by performing channel measurement and feedback based on a reference signal on the frequency domain unit. The precoding matrix corresponding to the frequency domain unit may be used to precode data subsequently transmitted through the frequency domain unit. In the following descriptions, a precoding matrix or a precoding vector corresponding to a frequency domain unit may also be referred to as a precoding matrix or a precoding vector of the frequency domain unit for short.

8. Frequency domain vector (frequency domain vector): is a vector that may represent a change rule of a channel in frequency domain. The frequency domain vector may be referred to as a frequency domain DFT vector or an oversampled frequency domain DFT vector. The following provides descriptions by using only an example in which the frequency domain vector is a frequency domain DFT vector. It may be understood that the frequency domain DFT vector in the following may also be expressed as an oversampled DFT vector, a frequency domain shift vector, a frequency domain vector, or the like.

Each frequency domain DFT vector may represent one change rule. When transmitted through a radio channel, a signal may reach a receive antenna from a transmit antenna along a plurality of paths. A multipath delay causes frequency selective fading, namely, a change of a frequency domain channel. Therefore, change rules that are of channels in frequency domain and that are caused by delays on different transmission paths may be represented by using different frequency domain DFT vectors.

A length of the frequency domain DFT vector may be determined by a quantity of to-be-reported frequency domain units preconfigured in a reporting band, may be determined by a length of the reporting band, or may be a value predefined in a protocol. The length of the frequency domain DFT vector is not limited in this application. The reporting band may be, for example, a CSI reporting band (csi-ReportingBand) carried in a preconfiguration reported by using channel state information (channel state information, CSI) in higher layer signaling (for example, a radio resource control (radio resource control, RRC) message).

A length of a frequency domain DFT vector $\mathbf{u}_f$ may be denoted as $N_\varepsilon$, where $N_\varepsilon$ is a positive integer. The frequency domain DFT vector may be, for example, a column vector or a row vector whose length is $N_f$. This is not limited in this application.

9. Frequency domain DFT vector set: may include a plurality of frequency domain DFT vectors of different lengths. In embodiments of this application, a length of the frequency domain DFT vector is $N_f$. Therefore, lengths of frequency domain DFT vectors in a frequency domain DFT vector set to which a frequency domain DFT vector reported by a terminal device belongs are all $N_\varepsilon$.

In a possible design, the frequency domain DFT vector set may include $N_\varepsilon$ frequency domain DFT vectors. The $N_\varepsilon$ frequency domain DFT vectors may be orthogonal to each other. Each frequency domain DFT vector in the frequency domain DFT vector set may be obtained from a DFT matrix or an inverse discrete Fourier transform (inverse discrete Fourier transformation, IDFT) matrix (a conjugate transposed matrix of the DFT matrix).

The $N_f$ frequency domain DFT vectors may be denoted as, for example, $\mathbf{b}_f^1$, $\mathbf{b}_f^2$, $\cdots$, and $\mathbf{b}_f^{N_f}$. A matrix

$U_f$ may be constructed based on the $N_f$ frequency domain DFT vectors, where $\mathbf{U}_f \triangleq \begin{bmatrix} \mathbf{b}_f^1 & \mathbf{b}_f^2 & \cdots & \mathbf{b}_f^{N_f} \end{bmatrix}$.

In another possible design, the frequency domain DFT vector set may be extended to $O_f \times N_f$ frequency domain DFT vectors by using an oversampling factor $O_f$. In this case, the frequency domain DFT vector set may include $O_f$ subsets, and each subset may include $N\varepsilon$ frequency domain DFT vectors. The $N\varepsilon$ frequency domain DFT vectors in each subset may be orthogonal to each other. Each frequency domain DFT vector in the frequency domain DFT vector set may be obtained from an oversampled DFT matrix or a conjugate transposed matrix of the oversampled DFT matrix. The oversampling factor $O_f$ is a positive integer.

$N_f$ frequency domain DFT vectors in an $o_f^{th}$ ($0 \le o_f \le O_f - 1$ and $o_s$ is an integer) subset of the frequency domain DFT vector set may be denoted as, for example, $\mathbf{b}_{f,o_f}^1$, $\mathbf{b}_{f,o_f}^2$, $\cdots$, and $\mathbf{b}_{f,o_f}^{N_f}$ respectively. In this case, a matrix $\mathbf{U}_f^{o_f}$ may be constructed based on the $N_s$ beam vectors in the $o_f^{th}$ subset, where $\mathbf{U}_f^{o_f} \triangleq \begin{bmatrix} \mathbf{b}_{f,o_f}^1 & \mathbf{b}_{f,o_f}^2 & \cdots & \mathbf{b}_{f,o_f}^{N_f} \end{bmatrix}$.

Therefore, each frequency domain DFT vector in the frequency domain DFT vector set may be obtained from a DFT matrix or an oversampled DFT matrix, or obtained from a conjugate transposed matrix of the DFT matrix or a conjugate transposed matrix of the oversampled DFT matrix. Each column vector in the frequency domain DFT vector set may be referred to as a frequency domain DFT vector or an oversampled frequency domain DFT vector. In other words, the frequency domain DFT vector may be an oversampled frequency domain DFT vector.

10. Space-frequency vector: may also be referred to as a joint space-frequency vector, a space-frequency vector pair, or a space-frequency basis vector, and is a vector that may represent a change rule of a channel in joint space-frequency domain. In embodiments of this application, if the channel is a single-polarized channel, a dimension of a joint space-frequency vector matrix is $((M_1 \times M_2) \times N_{sb}) \times A$, where $M_1$ is a quantity of transmit antenna ports of a network device in a horizontal direction, $M_2$ is a quantity of transmit antenna ports of the network device in a vertical direction, $N_{sb}$ is a quantity of frequency units, and A is a quantity of paths. It should be understood that, if the channel is a dual-polarized channel, a dimension of a joint space-frequency vector matrix is $(2 \times (M_1 \times M_2) \times N_{sb}) \times A$.

Optionally, the joint space-frequency vector may be a DFT vector.

11. DFT vector: A new joint space-frequency vector is obtained after a frequency domain vector in a joint space-frequency vector is shifted based on a frequency domain shift vector, and corresponds to a same spatial domain vector and a different frequency domain vector compared with the original joint space-frequency vector. The frequency domain shift vector in the joint space-frequency vector may be a DFT vector.

12. Weighting coefficient: is also referred to as a combination coefficient or a projection coefficient, and represents a weight of a channel for a joint space-frequency vector. The joint space-frequency vector corresponds to a spatial domain vector and a frequency domain DFT vector. The weighting coefficient includes an amplitude and a phase. Each weighting coefficient may include an amplitude and a phase. For example, in a space-frequency combination coefficient $ae^{j\theta}$, $a$ is an amplitude, and $\theta$ is a phase. As described above, there is a one-to-one correspondence between the weighting coefficient and a vector pair including a spatial domain vector and a frequency domain DFT vector obtained after a frequency domain DFT vector is shifted, in other words, each weighting coefficient corresponds to a spatial domain vector and a frequency domain DFT vector, or each weighting coefficient corresponds to one spatial domain vector and one frequency domain DFT vector.

A weighting coefficient with a maximum amplitude at each spatial layer is referred to as a strongest coefficient. A location indicator of a space-frequency vector corresponding to the strongest coefficient is a strongest coefficient indicator (SCI).

Optionally, the SCI may indicate only a location, of a CSI-RS port corresponding to the space-frequency vector of the strongest coefficient, in a set of selected CSI-RS ports. Alternatively, the SCI may indicate a location, of a CSI-RS port corresponding to the space-frequency vector of the strongest coefficient, in a set of selected CSI-RS ports, and also indicate a location, of a frequency domain DFT vector corresponding to the space-frequency vector of the strongest coefficient, in a set of selected frequency domain DFT vectors.

Optionally, each spatial layer has a strongest coefficient. Therefore, each spatial layer has an SCI, in other words, a plurality of spatial layers correspond to a plurality of SCIs.

13. Spatial layer (layer): In MIMO, a spatial layer may be considered as a data stream that can be independently transmitted. To improve spectrum resource utilization and improve a data transmission capability of a communication system, a network device may transmit data to a terminal device by using a plurality of spatial layers.

A quantity of spatial layers is a rank of a channel matrix. The terminal device may determine the quantity of spatial layers based on a channel matrix obtained through channel estimation. A precoding matrix may be determined based on the channel matrix. For example, the precoding matrix may be determined by performing SVD on the channel matrix or a covariance matrix of the channel matrix. In an SVD process, different spatial layers may be distinguished based on magnitude of eigenvalues. For example, a precoding vector determined by an eigenvector corresponding to a maximum eigenvalue may correspond to the first spatial layer, and a precoding vector determined by an eigenvector corresponding to a minimum eigenvalue may correspond to an $R^{th}$ spatial layer. In other words, eigenvalues corresponding to the first spatial layer to the $R^{th}$ spatial layer are in descending order. Simply, R spatial layers are in descending order of intensity from the first spatial layer to the $R^{th}$ spatial layer.

It should be understood that, distinguishing between different spatial layers based on eigenvalues is only a possible implementation, and should not constitute any limitation on this application. For example, another criterion for distinguishing between spatial layers may be predefined in a protocol. This is not limited in this application.

14. Configuration and preconfiguration: Both the configuration and the preconfiguration may be used in this application. The configuration indicates that a base station/server sends configuration information of some parameters or values of parameters to a terminal by using a message or signaling, so that the terminal determines a parameter for communication or a resource for transmission based on the values or the information. Similar to the configuration, the preconfiguration may be parameter information or parameter values obtained by the base station/server and the terminal device through pre-negotiation, or may be parameter information or parameter values specified in a standard protocol and used by the base station/server or the terminal device, or may be parameter information or parameter values pre-stored in the base station/server or the terminal device. This is not limited in this application. Further, these values and parameters may be changed or updated.

15. Channel state information (CSI) report (report): is information that is used to describe a channel attribute of a communication link and that is reported by a receive end (for example, a terminal device) to a transmit end (for example, a network device) in a wireless communication system. The CSI report may include, for example, but is not limited to, a precoding matrix indicator (PMI), a rank indicator (RI), a channel quality indicator (CQI), a channel state information reference signal (channel state information reference signal, CSI-RS), a CSI-RS resource indicator (CSI-RS resource indicator, CRI), and a layer indicator (layer indicator, LI). It should be understood that the foregoing listed specific content of CSI is merely an example for description, and shall not constitute any limitation on this application. The CSI may include one or more of the foregoing listed items, or may include other information that is different from the foregoing listed items and that represents the CSI. This is not limited in this application.

16. Related definitions of mathematical symbols in this application include:

(1) $\lceil A \rceil$, representing rounding A up;

(2) $\log_a(b)$, representing a logarithm of b in a case in which a is used as a base; and

(3) $\binom{A}{B}$, representing a quantity of combinations of B elements obtained from A elements.

For example, a terminal device reports CSI to a network device.

The terminal device may report one or more CSI reports in one time unit (for example, slot (slot)), and each CSI report may correspond to one CSI reporting setting condition. The CSI reporting setting condition may be determined based on, for example, a CSI reporting setting (CSI reporting setting). The CSI reporting setting may indicate time domain behavior and a band of CSI reporting, a format corresponding to a report quantity (report quantity), and the like. The time domain behavior includes, for example, periodic (periodic), semi-persistent (semi-persistent), and aperiodic (aperiodic) time domain behavior. The terminal device may generate one CSI report based on one CSI reporting setting.

As described above, this application may be applied to a 5G communication system or a next generation system of the 5G communication system. Herein, an example in which this application is applied to the 5G communication system is used for description. The 5G communication system has higher requirements on a system capacity, spectral efficiency, and the like. In the 5G communication system, a massive multiple-input multiple-output (Massive MIMO) technology plays an important role in spectral efficiency of the system. When a MIMO technology is used, a network device needs to perform modulation and coding and signal precoding when sending data to a terminal device. How to send the data to the terminal device needs to depend on channel state information fed back by the terminal device to the network device.

The following provides descriptions by using an example in which a network device is a base station and a terminal device is UE. A procedure in which the UE reports CSI to the base station may be shown in FIG. 2. It should be understood that FIG. 2 is merely an example of obtaining the CSI by the base station.

In FIG. 2, the procedure in which the UE reports the CSI to the base station includes the following steps:

Step 1: The base station sends channel measurement configuration information.
Step 2: The base station sends a reference signal (reference signal, RS) used for channel measurement.
Step 3: The UE performs measurement based on the RS to obtain a measurement result, and feeds back, to the base station, a CSI report indicating the measurement result (for example, the CSI report is carried in UCI). For example, the CSI report includes xxxx.

Step 4: The base station sends data based on the CSI report fed back by the UE.

In step 4, the base station determines, based on an RI in the CSI report fed back by the UE in step 3, a quantity of spatial layers for transmitting data to the UE; the base station determines, based on a CQI in the CSI report fed back by the UE in step 3, a modulation order for transmitting data to the UE and a bit rate of channel coding; and the base station determines, based on a PMI in the CSI report fed back by the UE in step 3, a precoding matrix for transmitting data to the UE.

Specifically, the PMI included in the CSI report is selected and reported based on a set of codebooks. In other words, an information bit corresponding to the PMI reported by the UE includes a selection result obtained by the UE through channel measurement. The selection result may include one or more of parameters such as frequency domain indication information indicating selected frequency domain DFT vectors, spatial domain indication information indicating selected CSI-RS ports, a strongest coefficient indicator (strongest coefficient indicator, SCI) indicating a space-frequency vector corresponding to a strongest coefficient in a set of selected space-frequency vectors, weighting coefficients of the space-frequency vectors, and locations of the weighting coefficients in a codebook.

The SCI in the PMI is used as an example. In a codebook of an R16 standard release, the SCI indicates only an index of a CSI-RS port corresponding to the strongest coefficient in a set of the selected CSI-RS ports, and Quantity of bits occupied by the $SCI = \lceil \log_2(2L) \rceil$ . $\lceil \log_2(2L) \rceil$ represents rounding $\log_2(2L)$ up, 2L is a quantity of CSI-RS ports in a set of CSI-RS ports selected by the terminal device from a set of P CSI-RS ports, and P is greater than or equal to 2L.

It should be noted that, in the codebook of the R16 standard release, one CSI-RS port is correlated with one spatial domain vector, to be specific, the parameter, namely, the CSI-RS port is a concept in a spatial domain dimension, and does not involve a frequency domain dimension.

Further, the base station may further include, in the channel measurement configuration information in step 1 shown in FIG. 2 (or in other configuration information different from the channel measurement configuration information in step 1 shown in FIG. 2), a resource used by the UE to carry the UCI. In other words, the base station allocates, to the UE based on the configuration information, the resource used to carry the UCI. In addition, when an uplink resource is limited due to poor channel quality, a large quantity of UEs communicating with the base station, or the like, the resource that is used to carry the UCI and that is allocated by the base station to the UE may be insufficient. In this case, in step 3, when the UE needs to discard some information carried in the UCI, to ensure that the UE feeds back more important channel information in a limited feedback space, priorities of different parameters carried in the UCI are set in a current standard.

The following describes the setting of the priorities of the different parameters in the current UCI by using an implementation example. The setting of the priorities of the different parameters in the current UCI are configured based on a premise that a universal set of frequency domain DFT vectors configured by the base station is frequency domain DFT vectors that can be selected by the UE.

On one hand, when weighting coefficient feedback is performed, to reduce feedback overheads, in the weighting coefficients that are of the space-frequency vectors and that are fed back in step 3 shown in FIG. 2, the UE normalizes the strongest coefficient to 1 and does not report amplitude and phase information for the strongest coefficient, and reports relative amplitude and phase information for other weighting coefficients by using the strongest coefficient as a reference.

For example, a strongest coefficient of a spatial layer is $x_1 = A_1 e^{j\theta_1}$, and another weighting coefficient of the spatial layer is $x_2 = A_2 e^{j\theta_2}$. After the strongest coefficient of the spatial layer is normalized to 1, a relative amplitude of the another weighting coefficient $x_2$ of the spatial layer is $A_2/A_1$. A relative amplitude is $\theta_2 - \theta_1$. In addition, the strongest coefficient may indicate a weight value corresponding to the strongest space-frequency vector selected by the UE. Therefore, the SCI indicating a location of the strongest coefficient is very important, so that a priority of the SCI in the UCI is high.

On the other hand, in the codebook of the R16 standard release, one CSI-RS port is correlated with one spatial domain vector, and the UE may determine a frequency domain vector by performing selection in the universal set of the frequency domain DFT vectors.

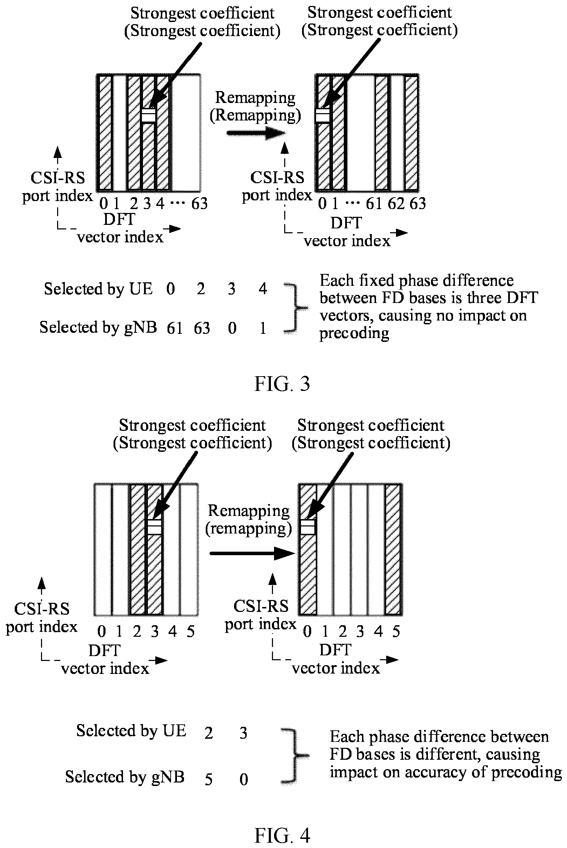

For example, in a scenario shown in FIG. 3, the universal set of the frequency domain DFT vectors is 64 frequency domain DFT vectors (whose index values are 0 to 63). In FIG. 3, rectangular boxes (including rectangular boxes filled with slashes, rectangular boxes filled with blanks, and a rectangular box filled with a horizontal line) indicate locations of weighting coefficients, a horizontal coordinate axis represents frequency domain DFT vector indexes (0 to 63) corresponding to the weighting coefficients, and a vertical coordinate axis represents CSI-RS port indexes (values of the CSI-RS port indexes are not shown in FIG. 3).

It should be noted that, a value range of the CSI-RS port indexes in FIG. 3 depends on a quantity (denoted as P) of CSI-RS ports corresponding to each spatial layer, and the weighting coefficients of the set of the space-frequency vectors selected by the UE correspond to 2L CSI-RS ports of P CSI-RS ports (2L is less than or equal to P), in other words, the weighting coefficients of the set of the space-frequency vectors selected by the UE correspond to 2L CSI-RS ports. In addition, in an example shown in FIG. 3, 2L is equal to P.

Specifically, in an example in a left figure shown in FIG. 3, frequency domain DFT vector indexes corresponding to the weighting coefficients of the set of the space-frequency vectors selected by the UE are 0, 2, 3, and 4, corresponding to rectangular boxes filled with slashes in the figure. Correspondingly, rectangular boxes filled with blanks are space-frequency vectors not selected by the UE, corresponding to, for example, frequency domain DFT vector indexes 1, 5, ..., and 63. In addition, a rectangular box filled with a horizontal line is a location of the strongest coefficient, and an index of a frequency domain DFT vector corresponding to the rectangular box is 3. For ease of description, in the following, frequency domain DFT vectors corresponding to the weighting coefficients of the set of the space-frequency vectors selected by the UE are referred to as selected frequency domain DFT vectors for short, and CSI-RS ports corresponding to the weighting coefficients of the set of the space-frequency vectors selected by the UE are referred to as selected CSI-RS port for short.

Then, the UE performs cyclic shift to shift the index of the frequency domain DFT vector corresponding to the strongest coefficient to 0, so that the originally selected frequency domain DFT vectors change from the indexes 0, 2, 3, and 4 to 61, 63, 0, and 1 in a right figure shown in FIG. 3, and feeds back shifted related information to the base station in the UCI. Therefore, frequency domain DFT vectors whose indexes are 61, 63, 0, and 1 are selected at a base station end as a precoding basis based on the UCI fed back by the UE, but indexes of frequency domain DFT vectors actually selected by the UE are 0, 2, 3, and 4. Because the plurality of frequency domain DFT vectors determined by the base station based on the UCI differ from the plurality of frequency domain DFT vectors actually selected by the UE by three DFT vector phases, precoding of the base station also differs by one linear phase, to be specific, it is equivalent that the precoding matrix corresponding to the PMI reported at a UE end in the UCI differs from a precoding matrix restored at the base station end by one fixed phase. Multiplying the precoding matrix by one fixed phase does not affect a beam direction. Therefore, precoding accuracy is not affected.

In the implementation scenario shown in FIG. 3, the SCI does not need to include the index of the frequency domain DFT vector corresponding to the strongest coefficient, and needs to include only an index of a CSI-RS port corresponding to the strongest coefficient. In addition, the index of the CSI-RS port indicates a specific location, of the CSI-RS port corresponding to the strongest coefficient, in the CSI-RS ports selected by the UE. In other words, an index of a frequency domain location of the SCI is 0 by default. Because performing linear shift on the universal set of a frequency domain DFT vector set is equivalent to multiplying all the frequency domain DFT vectors in the universal set by a same phase difference, the frequency domain DFT vectors determined by the base station differ from the frequency domain DFT vectors selected by the UE by one fixed phase difference, to be specific, it is equivalent that the precoding matrix corresponding to the PMI reported at the UE end differs from the precoding matrix restored at the base station end by one fixed phase. Multiplying the precoding matrix by one fixed phase does not affect a beam direction. Therefore, precoding accuracy is not affected. In other words, the frequency domain DFT vector that indicates frequency domain information and that corresponds to the strongest coefficient does not need to be indicated in the SCI, thereby reducing overheads of the SCI, so that a priority of the frequency domain indication information indicating the selected frequency domain DFT vectors in the UCI is lower than a priority of the SCI.

The following describes a plurality of pieces of information included in the UCI and priorities of the plurality of pieces of information by using examples.

In the current R16 standard release, the UCI is mainly divided into a part I (Part I) and a part II (Part II). The part I includes information such as a quantity of non-zero weighting coefficients (all non-zero weighting coefficients corresponding to one or more spatial layers) selected by the UE, an RI, and a CQI. The part II is divided into three groups based on importance of information. A group 0 has a first priority, a group 1 has a second priority, and a group 2 has a lowest priority.

For example, in the R16 standard release, the part II of the UCI is as follows:

The group 0 includes at least a CSI-RS port indicator and an SCI of each spatial layer.

The group 1 includes at least a frequency domain vector start index $M_{initial}$, a relative amplitude (the relative amplitude indicates a relative amplitude of a strongest coefficient in another polarization direction relative to a strongest coefficient indicated by the SCI), amplitudes of first $\lceil K^{NZ}/2 \rceil$ weighting coefficients arranged based on priorities (the superscript "NZ" means non-zero (Non-Zero, NZ), and $K^{NZ}$ indicates a quantity of non-zero weighting coefficients), phases of the first $\lceil K^{NZ}/2 \rceil$ weighting coefficients arranged based on the priorities, and bitmaps (bitmap) of first $\upsilon 2LM - \lceil K^{NZ}/2 \rceil$ weighting coefficients arranged based on priorities.

It should be noted that, in this embodiment and subsequent embodiments, υ indicates a quantity of spatial layers, 2L indicates a quantity of selected CSI-RS ports (if a dual polarization direction is used, L CSI-RS ports are selected in each polarization direction), and M indicates a quantity of selected frequency domain DFT vectors.

The group 2 includes at least amplitudes of last $\lceil K^{NZ}/2 \rceil$ weighting coefficients arranged based on priorities, phases of the last $\lceil K^{NZ}/2 \rceil$ weighting coefficients arranged based on the priorities, and bitmaps of the last $\lceil K^{NZ}/2 \rceil$ weighting coefficients arranged based on the priorities.

When an uplink resource is limited due to poor channel quality, a large quantity of UEs communicating with the base station, or the like, the resource that is used to carry the UCI and that is allocated by the base station to the UE may be insufficient. In this case, the UE determines reported information in the part II of the UCI based on the priorities of the groups. For example, if a quantity of UCI resources is small, the UE may report only the information included in the group 0; if UCI resources are further sufficient, the UE may report the information included in the group 0 and the group 1; or if UCI resources are more sufficient, the UE may report the information included in the group 0, the group 1, and the group 2. Therefore, in a current design of the part II of the UCI, the very important SCI and the CSI-RS port indicator correlated with the SCI are placed in the group 0 with a highest priority, and a frequency domain DFT vector indicator is placed in the group 1 with a second highest priority because the frequency domain DFT vector indicator is uncorrelated with the SCI.

The foregoing described implementation process is an implementation process in which the UE performs selection based on the universal set of the frequency domain DFT vectors configured by the base station. However, in a codebook of, for example, an R17 standard release, one CSI-RS port is correlated with one space-frequency domain vector (the space-frequency domain vector may also be referred to as a space-frequency vector for short), to be specific, the parameter, namely, the CSI-RS port is not merely a concept in a spatial domain dimension, and further involves a frequency domain dimension. In addition, the base station configures only some frequency domain DFT vectors for selection by the UE, in other words, frequency domain DFT vectors that can be selected by the UE are only a part of a universal set. In this scenario, setting of priorities in the current UCI may not be applicable anymore. The following provides descriptions by using an implementation example shown in FIG. 4.

It should be noted that, for meanings of parameters, such as rectangular boxes and a horizontal coordinate axis, shown in FIG. 4, refer to the foregoing descriptions of FIG. 3. Details are not described herein again.

As shown in FIG. 4, it is assumed that the universal set of frequency domain DFT vectors still includes 64 frequency domain DFT vectors, and a quantity of frequency domain DFT vectors that can be selected by the UE and that are configured by the base station is N=6, in other words, selection can be performed on a UE side in only six frequency domain DFT vectors given at a base station end.

In FIG. 4, in an example shown in a left figure in FIG. 4, indexes of the frequency domain DFT vectors given by the base station are 0 to 5, and indexes of frequency domain DFT vectors selected at the UE side are 2 and 3, corresponding to rectangular boxes filled with slashes in the figure. Correspondingly, rectangular boxes filled with blanks are space-frequency vectors not selected by the UE, corresponding to, for example, frequency domain DFT vector indexes 0, 1, 4, and 5. In addition, a rectangular box filled with a horizontal line is a location of the strongest coefficient, and an index of a frequency domain DFT vector corresponding to the rectangular box is 3. The UE performs cyclic shift in the six frequency domain DFT vectors to enable the index of the frequency domain DFT vector corresponding to the strongest coefficient to be 0, and reports shifted information to the base station. Therefore, indexes of frequency domain DFT vectors determined at the base station end based on the feedback of the UE are changed to 0 and 5, and indexes of frequency domain DFT vectors actually selected at the UE side are 2 and 3. Because the plurality of frequency domain DFT vectors determined by the base station based on the UCI no longer differ from the plurality of frequency domain DFT vectors actually selected by the UE by one fixed DFT vector phase, phase differences between the frequency domain DFT vectors determined by the base station based on the feedback of the UE and the frequency domain DFT vectors actually selected at the UE end are different in the universal set of the 64 frequency domain DFT vectors, and consequently precoding of the base station no longer differs by one linear phase. In other words, the phase differences between the frequency domain DFT vectors determined by the base station based on the feedback of the UE and all of the frequency domain DFT vectors actually selected at the UE end are different, so that the frequency domain DFT vectors determined by the base station no longer differ from the frequency domain DFT vectors selected by the UE by one fixed phase difference. Therefore, it cannot be ensured that the precoding matrix indicated at the UE end differs from a precoding matrix generated at the base station end by only one linear phase. As a result, beam directions that are obtained after precoding and that are indicated at the base station end based on the frequency domain DFT vectors whose indexes are 0 and 5 may be inconsistent with beam directions that are obtained after precoding and that are indicated by the frequency domain DFT vectors that are selected at the UE end and whose indexes are 2 and 3. This affects precoding accuracy.

It can be learned from the example shown in FIG. 4 that, when the UE reports the SCI, regardless of whether cyclic shift is performed on the frequency domain DFT vectors, it is very necessary to indicate an index that is of the frequency domain DFT vector of the strongest coefficient and that exists before cyclic shift. However, in setting of priorities of related parameters in the current UCI, when a CSI reporting storage space allocated by the base station to the UE is insufficient, it is possible that the UE reports only the SCI and does not report a frequency domain DFT vector indicator. Consequently, a frequency domain location that is of the SCI and that is determined by the network device is inaccurate, and accuracy of performing precoding based on the SCI by the network device is affected, affecting communication efficiency.

In addition, for example, in the codebook of the R16 standard release, if a universal set of frequency domain DFT vectors configured by the base station is frequency domain DFT vectors that can be selected by the UE, because a frequency domain DFT vector whose index is 0 is definitely selected by default, a frequency domain DFT vector indicator of each spatial layer at the UE side occupies a total of $\left\lceil log_2 \binom{N_3 - 1}{M_i - 1} \right\rceil$ bits, where $N_3$ represents a quantity of frequency domain DFT vectors that can be selected by the UE, $M_i$ represents a quantity of frequency domain DFT vectors selected at an $i$th spatial layer, and $\binom{N_3 - 1}{M_i - 1}$ represents a total of $\binom{N_3 - 1}{M_i - 1}$ manners of selecting $M_i$ - 1 frequency domain DFT vectors from $N_3$ - 1 frequency domain DFT vectors. In addition, to reduce overheads, when a value of $N_3$ is greater than 19, frequency domain DFT vector selection may be performed at the UE side in a window with a start point $M_{initial}$ and a length of $N_3'$, where $N_3' = \lceil 2M_i \rceil$, and the frequency domain DFT vector indicator of each layer at the UE side occupies a total of $\left\lceil log_2 \binom{N_3' - 1}{M_i - 1} \right\rceil$ bits. Therefore, when the value of $N_3$ is greater than 19, $M_{initial}$ and the frequency domain DFT vector indicator are also placed in the group 1 of the part II of the UCI for reporting.

For example, in the codebook of the R17 standard release, when frequency domain DFT vectors that can be selected by the UE are a part of a universal set of frequency domain DFT vectors configured by the base station, a quantity of the part of frequency domain DFT vectors is usually a small value (for example, 4, 6, or 8), and is not greater than 19. Therefore, it is also to be determined whether the UE needs to report a parameter $M_{initial}$.

Therefore, embodiments of this application provide a channel information feedback method and a communication apparatus, so that a network device obtains, based on an SCI and first information that have a same priority and that are included in UCI, a strongest coefficient corresponding to a downlink channel. Therefore, when a UCI reporting resource is limited, a terminal device feeds back at least the SCI and the first information indicating a second frequency domain DFT vector set, so that accuracy of a frequency domain location that corresponds to the SCI and that is determined by the network device based on the SCI and the first information is improved, to ensure validity of a precoding matrix as much as possible.

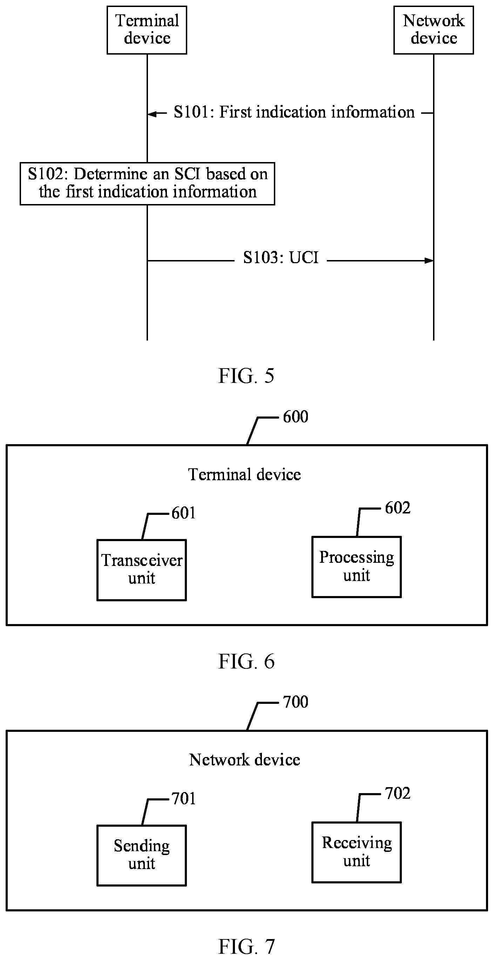

FIG. 5 is a schematic diagram of a channel information feedback method according to an embodiment of this application. The method includes the following steps.

S101: A network device sends first indication information.

In this embodiment, the network device sends the first indication information in step S101, and correspondingly, a terminal device receives the first indication information in step S101. The first indication information indicates a first frequency domain DFT vector set, in other words, the first indication information indicates that a set of frequency domain DFT vectors that can be selected by the terminal device is the first frequency domain DFT vector set.

Specifically, the first frequency domain DFT vector set includes a second frequency domain DFT vector set, in other words, the second frequency domain DFT vector set is a subset or a universal set of the first frequency domain DFT vector set. A quantity (denoted as N) of frequency domain DFT vectors included in the first frequency domain DFT vector set is greater than or equal to a quantity (denoted as M) of frequency domain DFT vectors included in the second frequency domain DFT vector set, in other words, N≥M. In addition, the second frequency domain DFT vector set may also be referred to as a (set) of frequency domain DFT vectors selected by the (terminal device), or a (set) of frequency domain DFT vectors that the terminal device selects.

In a possible implementation, the first indication information may be carried in a radio resource control (radio resource control, RRC) configuration message sent by the network device to the terminal device, may be carried in a media access control control element (media access control control element, MAC CE), or may be carried in another message/other signaling. This is not limited herein.

In a possible implementation, the first indication information includes an identifier of the first frequency domain DFT vector set; the first indication information includes one or more of an index of the first frequency domain DFT vector set and the quantity of frequency domain DFT vectors included in the first frequency domain DFT vector set; or the first indication information includes other information that can enable the terminal device to determine the first frequency domain DFT vector set. This is not limited herein.

In a possible implementation, in step S101, the network device may further send second indication information to the terminal device. The second indication information indicates the quantity M of frequency domain DFT vectors included in the second frequency domain DFT vector set, in other words, the second indication information indicates the quantity M of frequency domain DFT vectors (the second frequency domain DFT vector set) that need to be selected by the terminal device from the set (the first frequency domain DFT vector set) of the frequency domain DFT vectors that can be selected by the terminal device, in other words, the second indication information indicates the quantity M of frequency domain DFT vectors (the second frequency domain DFT vector set) selected by the terminal device from the set (the first frequency domain DFT vector set) of the frequency domain DFT vectors that can be selected by the terminal device.

Optionally, the second indication information includes the quantity of frequency domain DFT vectors included in the second frequency domain DFT vector set, or includes other information that can enable the terminal device to determine the quantity of frequency domain DFT vectors included in the second frequency domain DFT vector set. This is not limited herein.

Optionally, the second indication information may be included in the first indication information, to be specific, in addition to indicating the first frequency domain DFT vector set, the first indication information further indicates the second frequency domain DFT vector set.

Optionally, the second indication information may be preconfigured in the terminal device.

In a possible implementation, in step S101, the network device may further send third indication information to the terminal device. The third indication information indicates a first CSI-RS port set, in other words, the third indication information indicates that a set of CSI-RS ports that can be selected by the terminal device is the first CSI-RS port set.

Specifically, the first CSI-RS port set includes a second CSI-RS port set, in other words, the second CSI-RS port set is a subset or a universal set of the first CSI-RS port set. A quantity (denoted as P) of CSI-RS ports included in the first CSI-RS port set is greater than or equal to a quantity (denoted as 2L) of CSI-RS ports included in the second CSI-RS port set, in other words, $P \geq 2L$. In addition, the second CSI-RS port set may also be referred to as a (set) of CSI-RS ports selected by the (terminal device).

Optionally, the third indication information may be included in the first indication information, to be specific, in addition to indicating the first frequency domain DFT vector set, the first indication information further indicates the second CSI-RS port set.

Optionally, the third indication information may be preconfigured in the terminal device.

Optionally, the third indication information includes an identifier of the first CSI-RS port set; the third indication information includes one or more of an index of the first CSI-RS port set and the quantity of CSI-RS ports included in the first CSI-RS port set; or the third indication information includes other information that can enable the terminal device to determine the first CSI-RS port set. This is not limited herein.

In a possible implementation, in step S101, the network device may further send fourth indication information to the terminal device. The fourth indication information indicates the quantity 2L of CSI-RS ports included in the second CSI-RS port set, in other words, the fourth indication information indicates the quantity 2L of CSI-RS ports (the second CSI-RS port set) that need to be selected by the terminal device from the set (the first CSI-RS port set) of the CSI-RS ports that can be selected by the terminal device, in other words, the fourth indication information indicates the quantity 2L of CSI-RS ports (the second CSI-RS port set) selected by the terminal device from the set (the first CSI-RS port set) of the CSI-RS ports that can be selected by the terminal device.

Similarly, the fourth indication information may include the quantity of CSI-RS ports included in the second CSI-RS port set, or include other information that can enable the terminal device to determine the quantity of CSI-RS ports included in the second CSI-RS port set. This is not limited herein.

Optionally, the fourth indication information may be included in the first indication information, to be specific, in addition to indicating the first CSI-RS port set, the first indication information further indicates the second CSI-RS port set.

Optionally, the fourth indication information may be preconfigured in the terminal device.

It can be learned from the foregoing descriptions that any one or more of the second indication information, the third indication information, and the fourth indication information may be included in the first indication information, to be specific, in addition to indicating the first CSI-RS port set, the first indication information further indicates other related information.

In a possible implementation, the network device indicates a value of a parameter such as M or 2L by including an index or other indication information corresponding to a combination of one or more parameters such as (the quantity of frequency domain DFT vectors included in the second frequency domain DFT vector set) M and/or (the quantity of CSI-RS ports included in the second CSI-RS port set) 2L. In other words, the terminal device may determine the value of the parameter such as M and/or 2L by using the index or other indication information that corresponds to the combination of the one or more parameters and that is sent by the network device.

S102: The terminal device determines an SCI based on the first indication information.

In this embodiment, the terminal device determines the SCI based on the first indication information received in step S101.

Specifically, the terminal device may determine, in step S102 based on the first frequency domain DFT vector set indicated by the first indication information, a space-frequency vector corresponding to a strongest coefficient in a space-frequency vector set corresponding to the CSI-RS ports, and determine the SCI based on the space-frequency vector corresponding to the strongest coefficient, to indicate, to the network device in subsequent step S103 by using the SCI, the space-frequency vector corresponding to the strongest coefficient.

In a possible implementation, in step S102, the space-frequency vector set including the space-frequency vector corresponding to the strongest coefficient may be jointly determined by the terminal device based on the second frequency domain DFT vector set and the set of the CSI-RS port sets selected by the terminal device, and is denoted as a first space-frequency vector set; or the space-frequency vector set including the space-frequency vector corresponding to the strongest coefficient may be jointly determined by the terminal device based on the first frequency domain DFT vector set and the set of the CSI-RS ports selected by the terminal device, and is denoted as a second space-frequency vector set.

In addition, in step S102, the terminal device may determine the SCI based on the first indication information in a plurality of implementations. For example, the terminal device may determine, as a space-frequency vector corresponding to the SCI, the space-frequency vector corresponding to the strongest coefficient in the first space-frequency vector set corresponding to the second frequency domain DFT vector set including M frequency domain DFT vectors and the selected CSI-RS ports that are indicated by the first indication information. For another example, the terminal device may determine, as a space-frequency vector corresponding to the SCI, the space-frequency vector corresponding to the strongest coefficient in the second space-frequency vector set corresponding to the first frequency domain DFT vector set including N frequency domain DFT vectors and the selected CSI-RS ports that are indicated by the first indication information. The following describes the implementation process by using different embodiments.

Embodiment 1: In step S102, the terminal device determines, as the space-frequency vector corresponding to the SCI, the space-frequency vector corresponding to the strongest coefficient in the first space-frequency vector set corresponding to the second frequency domain DFT vector set including the M frequency domain DFT vectors and the CSI-RS ports selected by (the terminal device) that are indicated by the first indication information.

In a possible implementation of Embodiment 1, a quantity of bits occupied by the SCI determined by the terminal device in step S102 is correlated with the quantity of frequency domain DFT vectors in the second frequency domain DFT vector set. For example, the correlation indicates that the quantity of bits occupied by the SCI is positively correlated with the quantity of frequency domain DFT vectors in the second frequency domain DFT vector set, to be specific, a larger quantity of frequency domain DFT vectors in the second frequency domain DFT vector set indicates a larger quantity of bits occupied by the SCI; on the contrary, a smaller quantity of frequency domain DFT vectors in the second frequency domain DFT vector set indicates a smaller quantity of bits occupied by the SCI.

Based on the foregoing technical solution, the SCI indicates the space-frequency vector that corresponds to the second frequency domain DFT vector set selected by the terminal device and that corresponds to the strongest coefficient. The SCI may indicate a location, of a frequency domain DFT vector that is of the strongest coefficient and that is selected by the terminal device, in the second frequency domain DFT vector set by using at least some occupied bits.

In a possible implementation of Embodiment 1, the quantity of bits occupied by the SCI determined by the terminal device in step S102 is further correlated with the quantity of CSI-RS ports. For example, the correlation indicates that the quantity of bits occupied by the SCI is positively correlated with the quantity of CSI-RS ports in the second CSI-RS port set, to be specific, a larger quantity of CSI-RS ports in the second CSI-RS port set indicates a larger quantity of bits occupied by the SCI; on the contrary, a smaller quantity of CSI-RS ports in the second CSI-RS port set indicates a smaller quantity of bits occupied by the SCI.

Based on the foregoing technical solution, the SCI indicates the space-frequency vector corresponding to the strongest coefficient in the first space-frequency vector set corresponding to the second frequency domain DFT vector set selected by the terminal device and the selected CSI-RS ports. The SCI may indicate a location, of a CSI-RS port that is of the strongest coefficient and that is selected by the terminal device, in the selected CSI-RS ports by using at least some occupied bits. Therefore, in a subsequent process, after the network device receives the SCI, the network device determines, based on the SCI, the location, of the CSI-RS port corresponding to the strongest coefficient, in the CSI-RS ports selected by the terminal device.

In a possible implementation, the quantity of bits occupied by the SCI determined by the terminal device in step S102 satisfies a first manner, and the first manner includes:

$$\text{Quantity of bits occupied by the SCI} = \lceil \log_2(2LM) \rceil,$$

where

2L represents the quantity of CSI-RS ports, and M represents the quantity of frequency domain DFT vectors in the second frequency domain DFT vector set.

In a possible implementation of Embodiment 1, the quantity of bits occupied by the SCI determined by the terminal device in step S102 satisfies a second manner, and the second manner includes:

$$\text{Quantity of bits occupied by the SCI} = \lceil \log_2(2L) \rceil + \lceil \log_2(M) \rceil,$$

where

2L represents the quantity of CSI-RS ports, and M represents the quantity of frequency domain DFT vectors in the second frequency domain DFT vector set.

Embodiment 2: In step S102, the terminal device determines, as the space-frequency vector corresponding to the SCI, the space-frequency vector corresponding to the strongest coefficient in the second space-frequency vector set corresponding to the first frequency domain DFT vector set including the N frequency domain DFT vectors and the CSI-RS ports selected by the terminal device that are indicated by the first indication information.

In a possible implementation of Embodiment 2, a quantity of bits occupied by the SCI is correlated with the quantity of frequency domain DFT vectors in the first frequency domain DFT vector set. For example, the correlation indicates that the quantity of bits occupied by the SCI is positively correlated with the quantity of frequency domain DFT vectors in the first frequency domain DFT vector set, to be specific, a larger quantity of frequency domain DFT vectors in the first frequency domain DFT vector set indicates a larger quantity of bits occupied by the SCI; on the contrary, a smaller quantity of frequency domain DFT vectors in the first frequency domain DFT vector set indicates a smaller quantity of bits occupied by the SCI.

Based on the foregoing technical solution, the SCI indicates the space-frequency vector that corresponds to the first frequency domain DFT vector set configured by the network device and that corresponds to the strongest coefficient. The SCI may indicate a location, of a frequency domain DFT vector that is of the strongest coefficient and that is selected by the terminal device, in the first frequency domain DFT vector set by using at least some occupied bits.

In a possible implementation of Embodiment 2, the quantity of bits occupied by the SCI is further correlated with the quantity of CSI-RS ports. For example, the correlation indicates that the quantity of bits occupied by the SCI is positively correlated with the quantity of CSI-RS ports in the second CSI-RS port set, to be specific, a larger quantity of CSI-RS ports in the second CSI-RS port set indicates a larger quantity of bits occupied by the SCI; on the contrary, a smaller quantity of CSI-RS ports in the second CSI-RS port set indicates a smaller quantity of bits occupied by the SCI.

Based on the foregoing technical solution, the SCI indicates the space-frequency vector corresponding to the strongest coefficient in the second space-frequency vector set corresponding to the first frequency domain DFT vector set selected by the terminal device and the CSI-RS ports selected by the terminal device. The SCI may indicate a location, of a CSI-RS port that corresponds to the strongest coefficient and that is selected by the terminal device, in the selected CSI-RS ports by using at least some occupied bits. Therefore, in a subsequent process, after the network device receives the SCI, the network device determines, based on the SCI, the location, of the CSI-RS port corresponding to the strongest coefficient, in the CSI-RS ports selected by the terminal device.

In a possible implementation of Embodiment 2, the quantity of bits occupied by the SCI satisfies a fifth manner, and the fifth manner includes:

$$\text{Quantity of bits occupied by the SCI} = \lceil \log_2(2LN) \rceil,$$

where

2L represents the quantity of CSI-RS ports, and N represents the quantity of frequency domain DFT vectors in the first frequency domain DFT vector set.

In a possible implementation of Embodiment 2, the quantity of bits occupied by the SCI satisfies a sixth manner, and the sixth manner includes:

$$\text{Quantity of bits occupied by the SCI} = \lceil \log_2(2L) \rceil + \lceil \log_2(N) \rceil,$$

where

2L represents the quantity of CSI-RS ports, and N represents the quantity of frequency domain DFT vectors in the first frequency domain DFT vector set.

S103: The terminal device sends UCI.

In this embodiment, the terminal device sends the UCI to the network device in step S103, and correspondingly, the network device receives the UCI from the terminal device in step S103.

Specifically, the UCI includes the SCI and first information, and a priority of the SCI may be the same as or different from a priority of the first information. The SCI indicates the space-frequency vector corresponding to the strongest coefficient in the first space-frequency vector set. The first information indicates the second frequency domain DFT vector set, in other words, the first information indicates locations, of the frequency domain DFT vectors included in the second frequency domain DFT vector set, in the first frequency domain DFT vector set, in other words, the first information indicates indexes, of the frequency domain DFT vectors included in the second frequency domain DFT vector set, in the first frequency domain DFT vector set.

In a possible implementation, the UCI sent by the terminal device in step S103 does not include a parameter $M_{initial}$. In a codebook of an R16 standard release, frequency domain DFT vectors that can be selected by UE is a universal set of frequency domain DFT vectors. Therefore, when N is greater than a threshold (for example, 19), frequency domain DFT vector selection needs to be performed at a UE side in a window with a start point $M_{initial}$ and a length of $N'_3$, where $N'_3 = \lceil 2M \rceil$. However, in a codebook of an R17 standard release, frequency domain DFT vectors (a first frequency domain DFT vector set) that can be selected by UE is no longer a universal set of frequency domain DFT vectors. Therefore, a quantity of frequency domain DFT vectors (the first frequency domain DFT vector set) that can be selected by the UE is small. To be specific, when the quantity of frequency domain DFT vectors in the first frequency domain DFT vector set indicated by the first indication information sent by the network device in step S101 is less than a predefined threshold, and the threshold may be 19, 18, 10, or another value, the UCI does not include the parameter $M_{initial}$, so that overheads for sending the UCI by the terminal device can be reduced, and a communication resource can be saved. Correspondingly, the network device does not need to read the parameter $M_{initial}$ from the UCI in step S103.

In a possible implementation, a quantity of bits occupied by the first information sent by the terminal device in step S103 satisfies:

$$\text{Quantity of bits occupied by the first information} = \left\lceil \log_2 \binom{N}{M} \right\rceil,$$

where
N represents the quantity of frequency domain DFT vectors in the first frequency domain DFT vector set, M represents the quantity of frequency domain DFT vectors in the second frequency domain DFT vector set, and $\binom{N}{M}$ represents a quantity of combinations of M from N.

Based on the foregoing technical solution, the first information indicates the second frequency domain DFT vector set selected by the terminal device. When cyclic shift is not performed on the frequency domain DFT vectors, the first information of the terminal device includes a location indicator of the frequency domain DFT vector corresponding to the strongest coefficient, so that the quantity of bits occupied by the first information is correlated with the quantity N of frequency domain DFT vectors configured by the network device and the quantity M of frequency domain DFT vectors selected by the terminal device, and N and M are indicated by using the quantity of bits in this implementation. Therefore, because the terminal device does not need to perform cyclic shift on the frequency domain DFT vectors, implementation complexity is reduced.

For example, implementation of the quantity of bits occupied by the first information is described herein by using an example in which N=4 (the quantity of frequency domain DFT vectors in the first frequency domain DFT vector set is 4) and M=2 (the quantity of frequency domain DFT vectors in the second frequency domain DFT vector set is 2).

Specifically, when N=4 and M=2, there are six cases in which two frequency domain DFT vectors are selected from frequency domain DFT vectors whose indexes are 0, 1, 2, and 3. In this case, quantity of bits occupied by the first

$$\text{information} = \left\lceil \log_2 \binom{N}{M} \right\rceil = \left\lceil \log_2 \binom{4}{2} \right\rceil = 3$$

, and information that may be indicated by using the three bits occupied by the first information includes eight values: 000, 001, 010, 011, 100, 101, 110, and 111. To indicate the foregoing six cases, only six of the eight values may be used and two of the eight values may be discarded, two of the eight values may be reused as an indication of a same case, or another implementation may be used. This is not limited herein.

For example, only six (000, 001, 010, 011, 100, and 101) of the eight values are used and two (110 and 111) of the eight values are discarded. For example, when a value of the three bits occupied by the first information is 000, it indicates that frequency domain DFT vectors whose indexes are 0 and 1 are selected; when a value of the three bits occupied by the first information is 001, it indicates that frequency domain DFT vectors whose indexes are 0 and 2 are selected; when a value of the three bits occupied by the first information is 010, it indicates that frequency domain DFT vectors whose indexes are 0 and 3 are selected; when a value of the three bits occupied by the first information is 011, it indicates that frequency domain DFT vectors whose indexes are 1 and 2 are selected; when a value of the three bits occupied by the first information is 100, it indicates that frequency domain DFT vectors whose indexes are 1 and 3 are selected; or when a value of the three bits occupied by the first information is 101, it indicates that frequency domain DFT vectors whose indexes are 2 and 3 are selected.

Optionally, the network device may send fifth indication information to the terminal device before step S103, to indicate, by using the fifth indication information, index values corresponding to different values of the quantity of bits occupied by the first information.

Optionally, the fifth indication information may be included in the first indication information in step S101, to be specific, in addition to indicating the first CSI-RS port set, the first indication information further indicates the index values corresponding to the different values of the quantity of bits occupied by the first information.

Optionally, the fifth indication information may be preconfigured in the terminal device.

In a possible implementation, a quantity of bits occupied by the first information sent by the terminal device in step S103 satisfies:

$$\text{Quantity of bits occupied by the first information} = \left\lceil \log_2 \binom{N-1}{M-1} \right\rceil,$$

where

N represents the quantity of frequency domain DFT vectors in the first frequency domain DFT vector set, M represents the quantity of frequency domain DFT vectors in the second frequency domain DFT vector set, and $\binom{N-1}{M-1}$ represents a quantity of combinations of M - 1 from N - 1.

Based on the foregoing technical solution, the first information indicates the second frequency domain DFT vector set selected by the terminal device. When the terminal device performs cyclic shift on the first frequency domain DFT vector set to enable an index of the frequency domain DFT vector corresponding to the strongest coefficient indicated by the SCI to be 0, the terminal device considers, by default, that the frequency domain DFT vector corresponding to the strongest coefficient is definitely selected. Compared with an implementation in which the terminal device performs cyclic shift in a universal set of frequency domain DFT vectors in a codebook of an R16 standard release, in this embodiment (for example, during application to a codebook of an R17 standard release), the terminal device performs cyclic shift in the first frequency domain DFT vector set instead of performing cyclic shift in the universal set of the frequency domain DFT vectors. Therefore, the quantity of bits occupied by the first information is correlated with the quantity N-1 of frequency domain DFT vectors that are configured by the network device and from which the frequency domain DFT vector corresponding to the strongest coefficient is removed and the quantity M-1 of frequency domain DFT vectors that are selected by the terminal device and from which the frequency domain DFT vector corresponding to the strongest coefficient is removed, and N-1 and M-1 are indicated by using the quantity of bits in this implementation. Therefore, bit overheads of the SCI are reduced.

In a possible implementation, the SCI in the UCI sent by the terminal device in step S103 is implemented based on the implementation of Embodiment 1 in step S102. To be specific, in the UCI, the priority of the first information is the same as the priority of the SCI. The first information indicates the second frequency domain DFT vector set selected by the terminal device, and the SCI indicates the space-frequency vector corresponding to the strongest coefficient in the first space-frequency vector set corresponding to the second frequency domain DFT vector set and the CSI-RS ports selected by the terminal device. In other words, the SCI indicates the space-frequency vector that corresponds to the second frequency domain DFT vector set selected by the terminal device and that corresponds to the strongest coefficient, so that the network device obtains, based on the SCI and the first information that have the same priority and that are included in the UCI, a weighting coefficient of a strongest space-frequency vector corresponding to a downlink channel. Therefore, when a UCI reporting resource is limited, the terminal device feeds back at least the SCI and the first information indicating the second frequency domain DFT vector set, so that accuracy of a frequency domain location that corresponds to the SCI and that is determined by the network device based on the SCI and the first information is improved, to ensure validity of a precoding matrix as much as possible.

The following describes a specific data bearer manner of the UCI in a case in which the priority of the first information is the same as the priority of the SCI in the UCI sent by the terminal device in step S103 in Embodiment 1.

Usually, the UCI sent by the terminal device in step S103 may include at least two parts: a part I (Part I) and a part II (Part II).

The part I includes a quantity of non-zero weighting coefficients of all spatial layers, an RI, and a CQI.

In a possible implementation, the part II includes three groups (group), and different groups correspond to different priorities.

For example, the three groups included in the part II may be represented as a group 0, a group 1, and a group 2. In addition, a priority of the group 0 is the highest, a priority of the group 1 is the second highest, and a priority of the group 2 is the lowest. The group 0 includes at least an SCI and a frequency domain DFT vector indicator (the foregoing first information in this embodiment).

Optionally, the group 0 may further include a CSI-RS port indicator.

Optionally, the group 1 includes a relative amplitude (the relative amplitude indicates a relative amplitude of a strongest coefficient in another polarization direction relative to a strongest coefficient indicated by the SCI), amplitudes of first $\lceil K^{NZ}/2 \rceil$ weighting coefficients arranged based on priorities, phases of the first $\lceil K^{NZ}/2 \rceil$ weighting coefficients arranged based on the priorities, and bitmaps (bitmap) of first $\upsilon 2LM - \lfloor K^{NZ}/2 \rfloor$ weighting coefficients arranged based on priorities.

Optionally, the group 2 includes amplitudes of last $\lceil K^{NZ}/2 \rceil$ weighting coefficients arranged based on priorities, phases of the last $\lceil K^{NZ}/2 \rceil$ weighting coefficients arranged based on the priorities, and bitmaps of the last $\lceil K^{NZ}/2 \rceil$ weighting coefficients arranged based on the priorities.

In an implementation example, the group 0 includes a CSI-RS port indicator corresponding to each of one or more spatial layers, an SCI corresponding to each of the one or more spatial layers, and a frequency domain DFT vector indicator corresponding to each of the one or more spatial layers.

Optionally, if there are a plurality of spatial layers and the plurality of spatial layers correspond to a same CSI-RS port, the group 0 may include one CSI-RS port indicator; or the group 0 may include a plurality of CSI-RS port indicators, and a quantity of CSI-RS port indicators is equal to a quantity of spatial layers.

Optionally, if there are a plurality of spatial layers and the plurality of spatial layers correspond to a same frequency domain DFT vector indicator, the group 0 may include one frequency domain DFT vector indicator; or the group 0 may include a plurality of frequency domain DFT vector indicators, and a quantity of frequency domain DFT vector indicators is equal to a quantity of spatial layers.

The group 1 includes a relative amplitude (the relative amplitude indicates a relative amplitude of a strongest coefficient in another polarization direction relative to a strongest coefficient indicated by the SCI), amplitudes of first $\lceil K^{NZ}/2 \rceil$ weighting coefficients arranged based on priorities, phases of the first $\lceil K^{NZ}/2 \rceil$ weighting coefficients arranged based on the priorities, and bitmaps (bitmap) of first $\upsilon 2LM - \lfloor K^{NZ}/2 \rfloor$ weighting coefficients arranged based on priorities.

The group 2 includes amplitudes of last $\lceil K^{NZ}/2 \rceil$ weighting coefficients arranged based on priorities, phases of the last $\lceil K^{NZ}/2 \rceil$ weighting coefficients arranged based on the priorities, and bitmaps of the last $\lceil K^{NZ}/2 \rceil$ weighting coefficients arranged based on the priorities.

In a possible implementation, the part II includes two groups (group), and different groups correspond to different priorities.

For example, the two groups included in the part II may be represented as a group 0 and a group 1. In addition, a priority of the group 0 is higher, and a priority of the group 1 is lower. The group 0 includes at least an SCI and a frequency domain DFT vector indicator (the foregoing first information in this embodiment).

Optionally, the group 0 further includes a CSI-RS port indicator.

Optionally, the group 0 further includes a relative amplitude (the relative amplitude indicates a relative amplitude of a strongest coefficient in another polarization direction relative to a strongest coefficient indicated by the SCI), amplitudes of first $\lceil K^{NZ}/2 \rceil$ weighting coefficients arranged based on priorities, phases of the first $\lceil K^{NZ}/2 \rceil$ weighting coefficients arranged based on the priorities, and bitmaps of first $\upsilon 2LM - \lfloor K^{NZ}/2 \rfloor$ weighting coefficients arranged based on priorities.

Optionally, the group 1 includes amplitudes of last $\lceil K^{NZ}/2 \rceil$ weighting coefficients arranged based on priorities, phases of the last $\lceil K^{NZ}/2 \rceil$ weighting coefficients arranged based on the priorities, and bitmaps of the last $\lceil K^{NZ}/2 \rceil$ weighting coefficients arranged based on the priorities.

In an implementation example, the group 0 includes a CSI-RS port indicator corresponding to each of one or more spatial layers, an SCI corresponding to each of the one or more spatial layers, a frequency domain DFT vector indicator corresponding to each of the one or more spatial layers, a relative amplitude (the relative amplitude indicates a relative amplitude of a strongest coefficient in another polarization direction relative to a strongest coefficient indicated by the SCI), amplitudes of first $\lceil K^{NZ}/2 \rceil$

weighting coefficients arranged based on priorities, phases of the first $\lceil K^{NZ}/2 \rceil$ weighting coefficients arranged based on the priorities, and bitmaps (bitmap) of first $\upsilon 2LM - \lfloor K^{NZ}/2 \rfloor$ weighting coefficients arranged based on priorities.

Optionally, if there are a plurality of spatial layers and the plurality of spatial layers correspond to a same CSI-RS port, the group 0 may include one CSI-RS port indicator; or the group 0 may include a plurality of CSI-RS port indicators, and a quantity of CSI-RS port indicators is equal to a quantity of spatial layers.

Optionally, if there are a plurality of spatial layers and the plurality of spatial layers correspond to a same frequency domain DFT vector indicator, the group 0 may include one frequency domain DFT vector indicator; or the group 0 may include a plurality of frequency domain DFT vector indicators, and a quantity of frequency domain DFT vector indicators is equal to a quantity of spatial layers.

The group 1 includes amplitudes of last $\lceil K^{NZ}/2 \rceil$ weighting coefficients arranged based on priorities, phases of the last $\lceil K^{NZ}/2 \rceil$ weighting coefficients arranged based on the priorities, and bitmaps of the last $\lceil K^{NZ}/2 \rceil$ weighting coefficients arranged based on the priorities.

In a possible implementation, the SCI in the UCI sent by the terminal device in step S103 is implemented based on the implementation of Embodiment 2 in step S102. To be specific, in the UCI, the priority of the first information is lower than the priority of the SCI. The first information indicates the second frequency domain DFT vector set selected by the terminal device, and the SCI indicates the space-frequency vector corresponding to the strongest coefficient in the second space-frequency vector set corresponding to the first frequency domain DFT vector set configured by the network device and the CSI-RS ports selected by the terminal device. In other words, the SCI indicates the space-frequency vector that corresponds to the first frequency domain DFT vector set configured by the network device and that corresponds to the strongest coefficient, and there is no correlation between the SCI and the second frequency domain DFT vector set selected by the terminal device, so that the network device can obtain, based on the higher-priority SCI included in the UCI, a weighting coefficient of a strongest space-frequency vector corresponding to a downlink channel. Therefore, when a UCI reporting resource is limited, the terminal device feeds back at least the SCI, so that accuracy of a frequency domain location that corresponds to the SCI and that is determined by the network device based on the SCI can be improved, to ensure validity of a precoding matrix as much as possible. In addition, when the UCI reporting resource is limited, the terminal device may not need to feed back the first information, so that overheads can be reduced to a specific degree.

The following describes a specific data bearer manner of the UCI in a case in which the priority of the first information is lower than the priority of the SCI in the UCI sent by the terminal device in step S103 in Embodiment 2.

Usually, the UCI sent by the terminal device in step S103 may include at least two parts: a part I (Part I) and a part II (Part II).

The part I includes non-zero weighting coefficients of all spatial layers, an RI, and a CQI.

In a possible implementation, a first type of part II includes three groups (group), and different groups correspond to different priorities.

For example, the three groups included in the part II may be represented as a group 0, a group 1, and a group 2. In addition, a priority of the group 0 is the highest, a priority of the group 1 is the second highest, and a priority of the group 2 is the lowest. The group 0 includes at least an SCI.

Optionally, the group 0 may further include a CSI-RS port indicator.

Optionally, the group 1 includes a frequency domain DFT vector indicator (the foregoing first information in this embodiment), a relative amplitude (the relative amplitude indicates a relative amplitude of a strongest coefficient in another polarization direction relative to a strongest coefficient indicated by the SCI), amplitudes of first $\lceil K^{NZ}/2 \rceil$ weighting coefficients arranged based on priorities, phases of the first $\lceil K^{NZ}/2 \rceil$ weighting coefficients arranged based on the priorities, and bitmaps of first $\upsilon 2LM - \lfloor K^{NZ}/2 \rfloor$ weighting coefficients arranged based on priorities.

Optionally, the group 2 includes amplitudes of last $\lceil K^{NZ}/2 \rceil$ weighting coefficients arranged based on priorities, phases of the last $\lceil K^{NZ}/2 \rceil$ weighting coefficients arranged based on the priorities, and bitmaps of the last $\lfloor K^{NZ}/2 \rfloor$ weighting coefficients arranged based on the priorities.

In a possible implementation,
the group 0 includes a CSI-RS port indicator corresponding to each of one or more spatial layers and an SCI corresponding to each of the one or more spatial layers.

Optionally, if there are a plurality of spatial layers and the plurality of spatial layers correspond to a same CSI-RS port, the group 0 may include one CSI-RS port indicator; or the group 0 may include a plurality of CSI-RS port indicators, and a quantity of CSI-RS port indicators is equal to a quantity of spatial layers.

The group 1 includes a frequency domain DFT vector indicator, a relative amplitude (the relative amplitude indicates a relative amplitude of a strongest coefficient in another polarization direction relative to a strongest coefficient indicated by the SCI), amplitudes of first $\lceil K^{NZ}/2 \rceil$ weighting coefficients arranged based on priorities, phases of the first $\lceil K^{NZ}/2 \rceil$ weighting coefficients arranged based on the priorities, and bitmaps (bitmap) of first $\upsilon 2LM - \lfloor K^{NZ}/2 \rfloor$ weighting coefficients arranged based on priorities.

Optionally, if there are a plurality of spatial layers and the plurality of spatial layers correspond to a same frequency domain DFT vector indicator, the group 0 may include one frequency domain DFT vector indicator; or the group 0 may include a plurality of frequency domain DFT vector indicators, and a quantity of frequency domain DFT vector indicators is equal to a quantity of spatial layers.

The group 2 includes amplitudes of last $\lceil K^{NZ}/2 \rceil$ weighting coefficients arranged based on priorities, phases of the last $\lceil K^{NZ}/2 \rceil$ weighting coefficients arranged based on the priorities, and bitmaps of the last $\lceil K^{NZ}/2 \rceil$ weighting coefficients arranged based on the priorities.

The foregoing describes this application from a perspective of a method, and the following describes an apparatus in this application.

FIG. 6 is a schematic diagram of implementation of a terminal device according to an embodiment of this application. The terminal device may specifically perform the implementation process related to the terminal device in any one of the foregoing embodiments.

In an implementation, a terminal device 600 includes a transceiver unit 601 and a processing unit 602.

The transceiver unit 601 is configured to receive first indication information, where the first indication information indicates a first frequency domain DFT vector set, a subset of the first frequency domain DFT vector set includes a second frequency domain DFT vector set, and the second frequency domain DFT vector set and CSI-RS ports selected by the terminal device correspond to a first space-frequency vector set.

The processing unit 602 is configured to determine a strongest coefficient indicator SCI based on the first indication information, where the SCI indicates a space-frequency vector corresponding to a strongest coefficient in the first space-frequency vector set, and the space-frequency vector set is correlated with the channel state information reference signal CSI-RS ports.

The transceiver unit 601 is further configured to send uplink control information UCI, where the UCI includes first information and the SCI, the first information indicates the second frequency domain DFT vector set, and the first information and the SCI have a same priority in the UCI.

Optionally, the first information and the SCI have the same priority in the UCI, in other words, a priority of the first information in the UCI is the same as a priority of the SCI in the UCI.

In a possible implementation, a quantity of bits occupied by the SCI is correlated with a quantity of frequency domain DFT vectors in the second frequency domain DFT vector set.

In a possible implementation, the quantity of bits occupied by the SCI is further correlated with a quantity of CSI-RS ports.

In a possible implementation, the quantity of bits occupied by the SCI satisfies a first manner, and the first manner includes:

$$\text{Quantity of bits occupied by the SCI} = \lceil \log_2(2LM) \rceil,$$

where
2L represents the quantity of CSI-RS ports, and M represents the quantity of frequency domain DFT vectors in the second frequency domain DFT vector set.

In a possible implementation, the quantity of bits occupied by the SCI satisfies a second manner, and the second manner includes:

$$\text{Quantity of bits occupied by the SCI} = \lceil \log_2(2L) \rceil + \lceil \log_2(M) \rceil,$$

where
2L represents the quantity of CSI-RS ports, and M represents the quantity of frequency domain DFT vectors in the second frequency domain DFT vector set.

In a possible implementation,
a quantity of bits occupied by the first information satisfies a third manner, and the third manner includes:

$$\text{Quantity of bits occupied by the first information} = \left\lceil \log_2 \binom{N}{M} \right\rceil,$$

where

N represents a quantity of frequency domain DFT vectors in the first frequency domain DFT vector set, M represents the quantity of frequency domain DFT vectors in the second frequency domain DFT vector set, and $\binom{N}{M}$ represents a quantity of combinations of M from N.

In a possible implementation, a quantity of bits occupied by the first information satisfies a fourth manner, and the fourth manner includes:

$$\text{Quantity of bits occupied by the first information} = \left\lceil \log_2 \binom{N-1}{M-1} \right\rceil,$$

where

N represents the quantity of frequency domain DFT vectors in the first frequency domain DFT vector set, M represents the quantity of frequency domain DFT vectors in the second frequency domain DFT vector set, and $\binom{N-1}{M-1}$ represents a quantity of combinations of M - 1 from N - 1.

In a possible implementation, a terminal device 600 includes a transceiver unit 601 and a processing unit 602.

The transceiver unit 601 is configured to receive first indication information, where the first indication information indicates a first frequency domain DFT vector set, a subset of the first frequency domain DFT vector set includes a second frequency domain DFT vector set, and the second frequency domain DFT vector set and CSI-RS ports selected by the terminal device correspond to a second space-frequency vector set.

The processing unit 602 is configured to determine a strongest coefficient indicator SCI based on the first indication information, where the SCI indicates a space-frequency vector corresponding to a strongest coefficient in the second space-frequency vector set.

The transceiver unit 601 is further configured to send uplink control information UCI, where the UCI includes first information and the SCI, the first information indicates the second frequency domain DFT vector set, and a priority of the first information in the UCI is lower than a priority of the SCI in the UCI.

Optionally, the priority of the first information in the UCI is lower than the priority of the SCI in the UCI, in other words, the priority of the SCI in the UCI is higher than the priority of the first information in the UCI.

In a possible implementation, a quantity of bits occupied by the SCI is correlated with a quantity of frequency domain DFT vectors in the first frequency domain DFT vector set.

In a possible implementation, the quantity of bits occupied by the SCI is further correlated with a quantity of CSI-RS ports.

In a possible implementation, the quantity of bits occupied by the SCI satisfies a fifth manner, and the fifth manner includes:

$$\text{Quantity of bits occupied by the SCI} = \lceil \log_2(2LN) \rceil,$$

where

2L represents the quantity of CSI-RS ports, and M represents the quantity of frequency domain DFT vectors in the first frequency domain DFT vector set.

In a possible implementation, the quantity of bits occupied by the SCI satisfies a sixth manner, and the sixth manner includes:

$$\text{Quantity of bits occupied by the SCI} = \lceil \log_2(2L) \rceil + \lceil \log_2(N) \rceil,$$

where

2L represents the quantity of CSI-RS ports, and N represents the quantity of frequency domain DFT vectors in the first frequency domain DFT vector set.

In a possible implementation,

a quantity of bits occupied by the first information satisfies a seventh manner, and the seventh manner includes:

$$\text{Quantity of bits occupied by the first information} = \left\lceil \log_2 \binom{N}{M} \right\rceil,$$

where

N represents the quantity of frequency domain DFT vectors in the first frequency domain DFT vector set, M represents a quantity of frequency domain DFT vectors in the second frequency domain DFT vector set, and $\binom{N}{M}$ represents a quantity of combinations of M from N.

In a possible implementation, a quantity of bits occupied by the first information satisfies an eighth manner, and the eighth manner includes:

$$\text{Quantity of bits occupied by the first information} = \left\lceil \log_2 \binom{N-1}{M-1} \right\rceil,$$

where

N represents the quantity of frequency domain DFT vectors in the first frequency domain DFT vector set, M represents a quantity of frequency domain DFT vectors in the second frequency domain DFT vector set, and $\binom{N-1}{M-1}$ represents a quantity of combinations of M - 1 from N - 1.

It should be noted that, for details of content such as an information execution process of the units of the terminal device 600, refer to the descriptions in the foregoing method embodiments of this application. Details are not described herein again.

FIG. 7 is a schematic diagram of implementation of a network device according to an embodiment of this application. The network device may specifically perform the implementation process related to the network device in any one of the foregoing embodiments.

In a possible implementation, a network device 700 includes a sending unit 701 and a receiving unit 702.

The sending unit 701 is configured to send first indication information, where the first indication information indicates a first frequency domain DFT vector set, a subset of the first frequency domain DFT vector set includes a second frequency domain DFT vector set, and the second frequency domain DFT vector set and CSI-RS ports selected by a terminal device correspond to a first space-frequency vector set.

The receiving unit 702 is configured to receive uplink control information UCI, where the UCI includes first information and an SCI, the SCI indicates a space-frequency vector corresponding to a strongest coefficient in the first space-frequency vector set, the first information indicates the second frequency domain DFT vector set, and the first information and the SCI have a same priority in the UCI.

Optionally, the first information and the SCI have the same priority in the UCI, in other words, a priority of the first information in the UCI is the same as a priority of the SCI in the UCI.

In a possible implementation, a network device 700 includes a sending unit 701 and a receiving unit 702.

The sending unit 701 is configured to send first indication information, where the first indication information indicates a first frequency domain DFT vector set, a subset of the first frequency domain DFT vector set includes a second frequency domain DFT vector set, and the second frequency domain DFT vector set and CSI-RS ports selected by a terminal device correspond to a second space-frequency vector set.

The receiving unit 702 is configured to receive uplink control information UCI, where the UCI includes first information and the SCI, the SCI indicates a space-frequency vector corresponding to a strongest coefficient in the second space-frequency vector set, the first information indicates the second frequency domain DFT vector set, and a priority of the first information in the UCI is lower than a priority of the SCI in the UCI.

Optionally, the priority of the first information in the UCI is lower than the priority of the SCI in the UCI, in other words, the priority of the SCI in the UCI is higher than the priority of the first information in the UCI.

In a possible implementation, a quantity of bits occupied by the SCI is correlated with a quantity of frequency domain DFT vectors in the first frequency domain DFT vector set.

In a possible implementation, the quantity of bits occupied by the SCI is further correlated with a quantity of CSI-RS ports.

In a possible implementation, the quantity of bits occupied by the SCI satisfies a fifth manner, and the fifth manner includes:

$$\text{Quantity of bits occupied by the SCI} = \left\lceil \log_2 (2LN) \right\rceil,$$

where

2L represents the quantity of CSI-RS ports, and M represents the quantity of frequency domain DFT vectors in the first frequency domain DFT vector set.

In a possible implementation, the quantity of bits occupied by the SCI satisfies a sixth manner, and the sixth manner includes:

$$\text{Quantity of bits occupied by the SCI} = \lceil \log_2(2L) \rceil + \lceil \log_2(N) \rceil,$$

where

2L represents the quantity of CSI-RS ports, and N represents the quantity of frequency domain DFT vectors in the first frequency domain DFT vector set.

In a possible implementation,
a quantity of bits occupied by the first information satisfies a seventh manner, and the seventh manner includes:

$$\text{Quantity of bits occupied by the first information} = \left\lceil \log_2 \binom{N}{M} \right\rceil,$$

where

N represents the quantity of frequency domain DFT vectors in the first frequency domain DFT vector set, M represents a quantity of frequency domain DFT vectors in the second frequency domain DFT vector set, and $\binom{N}{M}$ represents a quantity of combinations of M from N.

In a possible implementation,
a quantity of bits occupied by the first information satisfies an eighth manner, and the eighth manner includes:

$$\text{Quantity of bits occupied by the first information} = \left\lceil \log_2 \binom{N-1}{M-1} \right\rceil,$$

where

N represents the quantity of frequency domain DFT vectors in the first frequency domain DFT vector set, M represents a quantity of frequency domain DFT vectors in the second frequency domain DFT vector set, and $\binom{N-1}{M-1}$ represents a quantity of combinations of M - 1 from N - 1.

It should be noted that, for details of content such as an information execution process of the units of the network device 700, refer to the descriptions in the foregoing method embodiments of this application. Details are not described herein again.

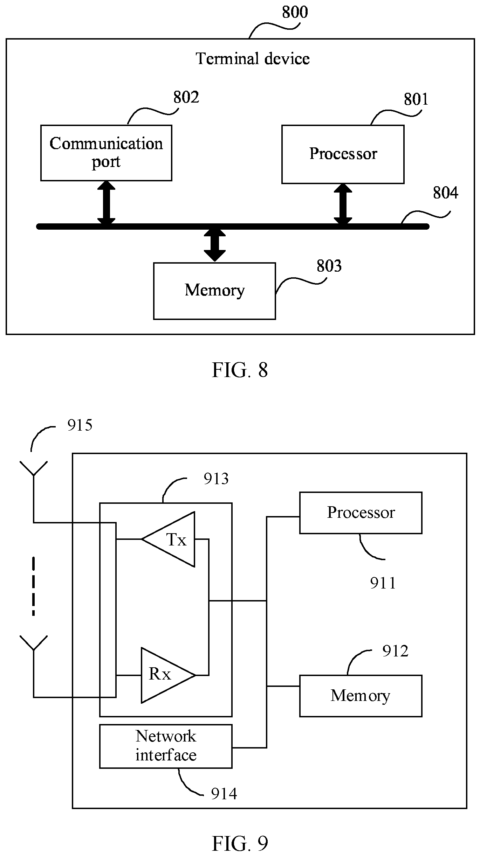

FIG. 8 is a schematic diagram of a possible logical structure of a terminal device 800 related to the foregoing embodiments according to an embodiment of this application. The terminal device 800 may include but is not limited to at least one processor 801 and a communication port 802. Further, optionally, the apparatus may further include at least one of a memory 803 and a bus 804. In this embodiment of this application, the at least one processor 801 is configured to perform control processing on an action of the terminal device 800.

In addition, the processor 801 may be a central processing unit, a general purpose processor, a digital signal processor, an application-specific integrated circuit, a field programmable gate array, another programmable logic device, a transistor logic device, a hardware component, or any combination thereof. The processor may implement or execute various example logical blocks, modules, and circuits described with reference to content disclosed in this application. Alternatively, the processor may be a combination implementing a computing function, for example, a combination including one or more microprocessors, or a combination of a digital signal processor and a microprocessor. It may be clearly understood by a person skilled in the art that, for the purpose of convenient and brief description, for a specific working process of the foregoing system, apparatus, and unit, refer to the corresponding process in the foregoing method embodiments. Details are not described herein again.

It should be noted that the terminal device 800 shown in FIG. 8 may be specifically configured to implement the steps implemented by the terminal device in the foregoing corresponding method embodiments, and implement the technical effects corresponding to the terminal device. For all specific implementations of the terminal device shown in FIG. 8, refer to the descriptions in the foregoing method embodiments. Details are not described herein again.

FIG. 9 is a schematic diagram of a structure of the network device in the foregoing embodiments according to an embodiment of this application. For a structure of the network device, refer to the structure shown in FIG. 9.

The network device includes at least one processor 911 and at least one network interface 914. Further, optionally, the network device further includes at least one memory 912, at least one transceiver 913, and one or more antennas 915. The processor 911, the memory 912, the transceiver 913, and the network interface 914 are connected to each other, for example, through a bus. In this embodiment of this application, the connection may include various interfaces, transmission lines, buses, or the like. This is not limited in this embodiment. The antenna 915 is connected to the transceiver 913. The network interface 914 is configured to enable the network device to communicate with another communication device through a communication link. For example, the network interface 914 may include a network interface between the network device and a core network device, for example, an S1 interface. The network interface may include a network interface between the network device and another network device (for example, another network device or a core network device), for example, an X2 or Xn interface.

The processor 911 is mainly configured to: process a communication protocol and communication data, control the entire network device, execute a software program, and process data of the software program, for example, is configured to support the network device in performing actions described in embodiments. The network device may include a baseband processor and a central processing unit. The baseband processor is mainly configured to process the communication protocol and the communication data. The central processing unit is mainly configured to control the entire terminal device, execute the software program, and process the data of the software program. The processor 911 in FIG. 9 may integrate functions of the baseband processor and the central processing unit. A person skilled in the art may understand that the baseband processor and the central processing unit may be alternatively processors independent of each other, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program. The processor executes the software program to implement a baseband processing function.

The memory is mainly configured to store the software program and data. The memory 912 may exist independently, and is connected to the processor 911. Optionally, the memory 912 may be integrated with the processor 911, for example, onto one chip. The memory 912 can store program code for executing the technical solutions in embodiments of this application, and the processor 911 controls the execution. Various types of executed computer program code may also be considered as drivers of the processor 911.

FIG. 9 shows only one memory and one processor. In an actual terminal device, there may be a plurality of processors and a plurality of memories. The memory may also be referred to as a storage medium, a storage device, or the like. The memory may be a storage element located on a same chip as the processor, namely, an on-chip storage element, or an independent storage element. This is not limited in this embodiment of this application.

The transceiver 913 may be configured to support receiving or sending of a radio frequency signal between the network device and a terminal. The transceiver 913 may be connected to the antenna 915. The transceiver 913 includes a transmitter Tx and a receiver Rx. Specifically, the one or more antennas 915 may receive a radio frequency signal. The receiver Rx of the transceiver 913 is configured to: receive the radio frequency signal from the antennas, convert the radio frequency signal into a digital baseband signal or a digital intermediate frequency signal, and provide the digital baseband signal or the digital intermediate frequency signal for the processor 911, so that the processor 911 performs further processing, for example, demodulation processing and decoding processing, on the digital baseband signal or the digital intermediate frequency signal. In addition, the transmitter Tx of the transceiver 913 is further configured to: receive a modulated digital baseband signal or a modulated digital intermediate frequency signal from the processor 911, convert the modulated digital baseband signal or the modulated digital intermediate frequency signal into a radio frequency signal, and send the radio frequency signal through the one or more antennas 915. Specifically, the receiver Rx may selectively perform one-level or multi-level down-mixing processing and analog-to-digital conversion processing on the radio frequency signal, to obtain the digital baseband signal or the digital intermediate frequency signal. A sequence of the down-mixing processing and the analog-to-digital conversion processing is adjustable. The transmitter Tx may selectively perform one-level or multi-level up-mixing processing and digital-to-analog conversion processing on the modulated digital baseband signal or the modulated digital intermediate frequency signal, to obtain the radio frequency signal. A sequence of the up-mixing processing and the digital-to-analog conversion processing is adjustable. The digital baseband signal and the digital intermediate frequency signal may be collectively referred to as digital signals.

The transceiver may also be referred to as a transceiver unit, a transceiver apparatus, or the like. Optionally, a component for implementing a receiving function in the transceiver unit may be considered as a receiving unit, and a component for implementing a sending function in the transceiver unit may be considered as a sending unit, in other words, the transceiver unit includes the receiving unit and the sending unit. The receiving unit may also be referred to as a receiver, an input port, a receiving circuit, or the like. The sending unit may be referred to as a transmitter, a transmitting circuit, or the like.

It should be noted that the network device shown in FIG. 9 may be specifically configured to implement the steps implemented by the network device in the foregoing method embodiments, and implement the technical effects corresponding to the network device. For all specific implementations of the network device shown in FIG. 9, refer to the descriptions in the foregoing method embodiments. Details are not described herein again.

An embodiment of this application further provides a computer-readable storage medium storing one or more computer executable instructions. When the computer executable instructions are executed by a processor, the processor performs the method according to the possible implementations of the terminal device in the foregoing embodiments.

An embodiment of this application further provides a computer-readable storage medium storing one or more computer executable instructions. When the computer executable instructions are executed by a processor, the processor performs the method according to the possible implementations of the network device in the foregoing embodiments.

An embodiment of this application further provides a computer program product (also referred to as a computer program) storing one or more computer executable instructions. When the computer program product is executed by a processor, the processor performs the method in the foregoing possible implementations of the terminal device.

An embodiment of this application further provides a computer program product storing one or more computer executable instructions. When the computer program product is executed by a processor, the processor performs the method in the foregoing possible implementations of the network device.

An embodiment of this application further provides a chip system. The chip system includes at least one processor, configured to support a terminal device in implementing the functions in the foregoing possible implementations of the terminal device. Optionally, the chip system further includes an interface circuit. The interface circuit provides program instructions and/or data for the at least one processor. In a possible design, the chip system may further include a memory. The memory is configured to store program instructions and data that are necessary for the terminal device. The chip system may include a chip, or may include a chip and another discrete component.

An embodiment of this application further provides a chip system. The chip system includes at least one processor, configured to support a network device in implementing the functions in the foregoing possible implementations of the network device. Optionally, the chip system further includes an interface circuit. The interface circuit provides program instructions and/or data for the at least one processor. In a possible design, the chip system may further include a memory. The memory is configured to store program instructions and data that are necessary for the network device. The chip system may include a chip, or may include a chip and another discrete component. The network device may be specifically the network device in the foregoing method embodiments.

An embodiment of this application further provides a communication system. An architecture of the network system includes the terminal device and the network device in any one of the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A channel information feedback method, comprising:

   receiving, by a terminal device, first indication information, wherein the first indication information indicates a first frequency domain discrete Fourier transform DFT vector set, the first frequency domain DFT vector set comprises a second frequency domain DFT vector set, and the second frequency domain DFT vector set and channel state information reference signal CSI-RS ports selected by the terminal device correspond to a first space-frequency vector set;

   determining, by the terminal device, a strongest coefficient indicator SCI based on the first indication information, wherein the SCI indicates a space-frequency vector corresponding to a strongest coefficient in the first space-frequency vector set; and

   sending, by the terminal device, uplink control information UCI, wherein the UCI comprises first information and the SCI, the first information indicates the second frequency domain DFT vector set, and the first information and the SCI have a same priority in the UCI.

2. A channel information feedback method, comprising:

   sending, by a network device, first indication information, wherein the first indication information indicates a first frequency domain discrete Fourier transform DFT vector set, the first frequency domain DFT vector set comprises a second frequency domain DFT vector set, and the second frequency domain DFT vector set and channel state information reference signal CSI-RS ports selected by a terminal device correspond to a first space-frequency vector set; and

   receiving, by the network device, uplink control information UCI, wherein the UCI comprises first information and an SCI, the SCI indicates a space-frequency vector corresponding to a strongest coefficient in the first space-frequency vector set, the first information indicates the second frequency domain DFT vector set, and the first information and the SCI have a same priority in the UCI.

3. The method according to claim 1 or 2, wherein a quantity of bits occupied by the SCI is correlated with a quantity of frequency domain DFT vectors in the second frequency domain DFT vector set.

4. The method according to claim 3, wherein the quantity of bits occupied by the SCI is further correlated with a quantity of CSI-RS ports.

5. The method according to claim 4, wherein the quantity of bits occupied by the SCI satisfies a first manner, and the first manner comprises:

$$\text{Quantity of bits occupied by the SCI} = \lceil \log_2(2\text{LM}) \rceil,$$

   wherein
   2L represents the quantity of CSI-RS ports, M represents the quantity of frequency domain DFT vectors in the second frequency domain DFT vector set, and $\lceil \log_2(2\text{LM}) \rceil$ represents rounding $\log_2(2\text{LM})$ up.

6. The method according to claim 4, wherein the quantity of bits occupied by the SCI satisfies a second manner, and the second manner comprises:

$$\text{Quantity of bits occupied by the SCI} = \lceil \log_2(2\text{L}) \rceil + \lceil \log_2(\text{M}) \rceil,$$

   wherein
   2L represents the quantity of CSI-RS ports, M represents the quantity of frequency domain DFT vectors in the second frequency domain DFT vector set, $\lceil \log_2(2L) \rceil$ represents rounding $\log_2(2L)$ up, and $\lceil \log_2(M) \rceil$ represents rounding $\log_2(M)$ up.

7. The method according to any one of claims 1 to 6, wherein a quantity of bits occupied by the first information satisfies a third manner, and the third manner comprises:

$$\text{Quantity of bits occupied by the first information} = \left\lceil \log_2 \binom{N}{M} \right\rceil,$$

wherein

N represents a quantity of frequency domain DFT vectors in the first frequency domain DFT vector set, M represents the quantity of frequency domain DFT vectors in the second frequency domain DFT vector set, $\left\lceil \log_2 \binom{N}{M} \right\rceil$ represents rounding $\log_2 \binom{N}{M}$ up, and $\binom{N}{M}$ represents a quantity of combinations of M from N.

8. The method according to any one of claims 1 to 6, wherein a quantity of bits occupied by the first information satisfies a fourth manner, and the fourth manner comprises:

Quantity of bits occupied by the first $\text{information} = \left\lceil \log_2 \binom{N-1}{M-1} \right\rceil$, wherein

N represents a quantity of frequency domain DFT vectors in the first frequency domain DFT vector set, M represents the quantity of frequency domain DFT vectors in the second frequency domain DFT vector set, $\left\lceil \log_2 \binom{N-1}{M-1} \right\rceil$ represents rounding $\log_2 \binom{N-1}{M-1}$ up, and $\binom{N-1}{M-1}$ represents a quantity of combinations of M - 1 from N - 1.

9. A communication apparatus, comprising a transceiver unit and a processing unit, wherein

the transceiver unit is configured to receive first indication information, wherein the first indication information indicates a first frequency domain discrete Fourier transform DFT vector set, a subset of the first frequency domain DFT vector set comprises a second frequency domain DFT vector set, and the second frequency domain DFT vector set and channel state information reference signal CSI-RS ports selected by the terminal device correspond to a first space-frequency vector set;
the processing unit is configured to determine a strongest coefficient indicator SCI based on the first indication information, wherein the SCI indicates a space-frequency vector corresponding to a strongest coefficient in the first space-frequency vector set; and
the transceiver unit is further configured to send uplink control information UCI, wherein the UCI comprises first information and the SCI, the first information indicates the second frequency domain DFT vector set, and the first information and the SCI have a same priority in the UCI.

10. A communication apparatus, comprising a sending unit and a receiving unit, wherein

the sending unit is configured to send first indication information, wherein the first indication information indicates a first frequency domain discrete Fourier transform DFT vector set, a subset of the first frequency domain DFT vector set comprises a second frequency domain DFT vector set, and the second frequency domain DFT vector set and channel state information reference signal CSI-RS ports selected by a terminal device correspond to a first space-frequency vector set; and
the receiving unit is configured to receive uplink control information UCI, wherein the UCI comprises first information and an SCI, the SCI indicates a space-frequency vector corresponding to a strongest coefficient in the first space-frequency vector set, the first information indicates the second frequency domain DFT vector set, and the first information and the SCI have a same priority in the UCI.

11. The apparatus according to claim 9 or 10, wherein a quantity of bits occupied by the SCI is correlated with a quantity of frequency domain DFT vectors in the second frequency domain DFT vector set.

**12.** The apparatus according to claim 11, wherein the quantity of bits occupied by the SCI is further correlated with a quantity of CSI-RS ports.

**13.** The apparatus according to claim 12, wherein the quantity of bits occupied by the SCI satisfies a first manner, and the first manner comprises:

$$\text{Quantity of bits occupied by the SCI} = \lceil \log_2(2LM) \rceil,$$

wherein 2L represents the quantity of CSI-RS ports, M represents the quantity of frequency domain DFT vectors in the second frequency domain DFT vector set, and $\lceil \log_2(2LM) \rceil$ represents rounding $\log_2(2LM)$ up.

**14.** The apparatus according to claim 12, wherein the quantity of bits occupied by the SCI satisfies a second manner, and the second manner comprises:

$$\text{Quantity of bits occupied by the SCI} = \lceil \log_2(2L) \rceil + \lceil \log_2(M) \rceil,$$

wherein
2L represents the quantity of CSI-RS ports, M represents the quantity of frequency domain DFT vectors in the second frequency domain DFT vector set, $\lceil \log_2(2L) \rceil$ represents rounding $\log_2(2L)$ up, and $\lceil \log_2(M) \rceil$ represents rounding $\log_2(M)$ up.

**15.** The apparatus according to any one of claims 9 to 14, wherein
a quantity of bits occupied by the first information satisfies a third manner, and the third manner comprises:

$$\text{Quantity of bits occupied by the first information} = \left\lceil \log_2 \binom{N}{M} \right\rceil,$$

wherein
N represents a quantity of frequency domain DFT vectors in the first frequency domain DFT vector set, M represents the quantity of frequency domain DFT vectors in the second frequency domain DFT vector set, $\left\lceil \log_2 \binom{N}{M} \right\rceil$ represents rounding $\log_2 \binom{N}{M}$ up, and $\binom{N}{M}$ represents a quantity of combinations of M from N.

**16.** The apparatus according to any one of claims 9 to 14, wherein
a quantity of bits occupied by the first information satisfies a fourth manner, and the fourth manner comprises:

$$\text{Quantity of bits occupied by the first information} = \left\lceil \log_2 \binom{N-1}{M-1} \right\rceil,$$

wherein
N represents a quantity of frequency domain DFT vectors in the first frequency domain DFT vector set, M represents the quantity of frequency domain DFT vectors in the second frequency domain DFT vector set, $\left\lceil \log_2 \binom{N-1}{M-1} \right\rceil$ represents rounding $\log_2 \binom{N-1}{M-1}$ up, and $\binom{N-1}{M-1}$ represents a quantity of combinations of M - 1 from N - 1.

**17.** A communication apparatus, comprising at least one processor, coupled to a memory, wherein

the memory is configured to store a program or instructions; and
the at least one processor is configured to execute the program or the instructions, to enable the apparatus to implement the method according to any one of claims 1 to 8.

**18.** A computer program product comprising program instructions, wherein when the program instructions are run on a computer, the computer is enabled to perform the method according to any one of claims 1 to 8.

**19.** A computer-readable storage medium, wherein the computer-readable storage medium stores program instructions, and when the program instructions are run, the method according to any one of claims 1 to 8 is performed.

FIG. 1

FIG. 2

Strongest coefficient
(Strongest coefficient)

Strongest coefficient
(Strongest coefficient)

Remapping
(Remapping)

CSI-RS
port index
0 1 2 3 4 ··· 63
DFT
vector index

CSI-RS
port index
0 1 ··· 61 62 63
DFT
vector index

Selected by UE    0    2    3    4

Selected by gNB   61   63   0    1

Each fixed phase difference
between FD bases is three DFT
vectors, causing no impact on
precoding

FIG. 3

Strongest coefficient
(Strongest coefficient)

Strongest coefficient
(Strongest coefficient)

Remapping
(remapping)

CSI-RS
port index
0 1 2 3 4 5
DFT
vector index

CSI-RS
port index
0 1 2 3 4 5
DFT
vector index

Selected by UE    2    3

Selected by gNB    5    0

Each phase difference between
FD bases is different, causing
impact on accuracy of precoding

FIG. 4

FIG. 5

FIG. 6

FIG. 7

800

Terminal device

802

Communication port

801

Processor

804

803

Memory

FIG. 8

915

913

Tx

Processor

911

Rx

912

Memory

Network interface

914

FIG. 9

| **INTERNATIONAL SEARCH REPORT** | International application No. |
| --- | --- |
| | **PCT/CN2022/110150** |

| **A.** | **CLASSIFICATION OF SUBJECT MATTER** |
| --- | --- |

H04B 7/0456(2017.01)i;  H04B 7/06(2006.01)i

According to International Patent Classification (IPC) or to both national classification and IPC

| **B.** | **FIELDS SEARCHED** |
| --- | --- |

Minimum documentation searched (classification system followed by classification symbols)

H04B7/-

Documentation searched other than minimum documentation to the extent that such documents are included in the fields searched

Electronic data base consulted during the international search (name of data base and, where practicable, search terms used)

CNABS; CNTXT; CNKI: CSI RS, 最强系数指示, 频域, PMI, DFT, 预编码矩阵指示, SCI, 上行控制信息, 信道状态信息参考信号, UCI, CSI-RS; VEN; DWPI; USTXT; EPTXT; WOTXT; 3GPP: CSI RS, discrete fourier transform, precoding matrix indicator, PMI, strongest coefficient indicator, channel state information reference signal, DFT, SCI, UCI, CSI-RS, uplink control information

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | CN 112868187 A (FRAUNHOFER-GESELLSCHAFT ZUR FÖRDERUNG DER ANGEWANDTEN FORSCHUNG E. V.) 28 May 2021 (2021-05-28) description, paragraphs [0203]-[0314] | 1-19 |
| A | CN 111835459 A (VIVO COMMUNICATION TECHNOLOGY CO., LTD.) 27 October 2020 (2020-10-27) entire document | 1-19 |
| A | CN 110073620 A (SAMSUNG ELECTRONICS CO., LTD.) 30 July 2019 (2019-07-30) entire document | 1-19 |
| A | CN 111800172 A (HUAWEI TECHNOLOGIES CO., LTD.) 20 October 2020 (2020-10-20) entire document | 1-19 |
| A | WO 2021028389 A1 (FRAUNHOFER-GESELLSCHAFT ZUR FORDERUNG DER ANGEWANDTEN FORSCHUNG E.V.) 18 February 2021 (2021-02-18) entire document | 1-19 |
| A | US 2021051508 A1 (LG ELECTRONICS INC.) 18 February 2021 (2021-02-18) entire document | 1-19 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 October 2022** | **04 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/110150**

**C.**     **DOCUMENTS CONSIDERED TO BE RELEVANT**

| Category* | Citation of document, with indication, where appropriate, of the relevant passages | Relevant to claim No. |
|---|---|---|
| A | ZTE. ""R1-1908190 CSI Enhancement for MU-MIMO Support"" <br> *3GPP TSG RAN WG1 Meeting #98*, 17 August 2019 (2019-08-17), <br> entire document | 1-19 |
| A | SAMSUNG. ""R1-2105295 R17 CSI r1"" <br> *3GPP TSG RAN WG1#105-e*, 12 May 2021 (2021-05-12), <br> entire document | 1-19 |

Form PCT/ISA/210 (second sheet) (January 2015)

**INTERNATIONAL SEARCH REPORT**
Information on patent family members

International application No.

**PCT/CN2022/110150**

| Patent document cited in search report | | | Publication date (day/month/year) | Patent family member(s) | | | Publication date (day/month/year) |
|---|---|---|---|---|---|---|---|
| CN | 112868187 | A | 28 May 2021 | KR | 20210106548 | A | 30 August 2021 |
| | | | | CN | 113228527 | A | 06 August 2021 |
| | | | | JP | 2021534615 | A | 09 December 2021 |
| | | | | WO | 2020126960 | A1 | 25 June 2020 |
| | | | | KR | 20210025097 | A | 08 March 2021 |
| | | | | WO | 2020126905 | A1 | 25 June 2020 |
| | | | | EP | 3672096 | A1 | 24 June 2020 |
| | | | | EP | 3900208 | A1 | 27 October 2021 |
| | | | | EP | 3900207 | A1 | 27 October 2021 |
| | | | | EP | 3672099 | A1 | 24 June 2020 |
| | | | | US | 11251854 | B1 | 15 February 2022 |
| | | | | EP | 3672100 | A1 | 24 June 2020 |
| | | | | US | 2022029674 | A1 | 27 January 2022 |
| | | | | JP | 2022515220 | A | 17 February 2022 |
| CN | 111835459 | A | 27 October 2020 | None | | | |
| CN | 110073620 | A | 30 July 2019 | CA | 3047229 | A1 | 21 June 2018 |
| | | | | US | 2018175993 | A1 | 21 June 2018 |
| | | | | AU | 2017374457 | A1 | 30 May 2019 |
| | | | | EP | 3529929 | A1 | 28 August 2019 |
| | | | | KR | 20190088045 | A | 25 July 2019 |
| | | | | JP | 2020502922 | A | 23 January 2020 |
| | | | | AU | 2022204501 | A1 | 14 July 2022 |
| | | | | WO | 2018111007 | A1 | 21 June 2018 |
| | | | | US | 2021111853 | A1 | 15 April 2021 |
| CN | 111800172 | A | 20 October 2020 | None | | | |
| WO | 2021028389 | A1 | 18 February 2021 | EP | 3780411 | A1 | 17 February 2021 |
| | | | | EP | 4014341 | A1 | 22 June 2022 |
| US | 2021051508 | A1 | 18 February 2021 | WO | 2021029702 | A1 | 18 February 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110898764